# FASCICULE DE BREVET EUROPEEN

(11) **EP 1 537 747 B1**
(45) Date de publication et mention de la délivrance du brevet: **08.03.2006**
(21) Numéro de dépôt: 03761595.2
(22) Date de dépôt: 27.06.2003
(51) Int. Cl.: H04N 7/62

(54) **SYSTEME ET PROCEDE DE SYNCHRONISATION POUR PROGRAMMES AUDIOVISUELS, DISPOSITIFS ET PROCEDES ASSOCIES**
SYNCHRONISATIONSSYSTEM UND VERFAHREN FÜR AUDIOVISUELLE PROGRAMME
AUDIOVISUAL PROGRAM SYNCHRONIZATION SYSTEM AND METHOD

(30) Priorité: 28.06.2002 FR 0208091
(43) Date de publication de la demande: 08.06.2005
(73) Titulaire: Thomson Licensing, 92100 Boulogne Billancourt (FR)
(72) Inventeur: LESENNE, Laurent, F-35690 Acigne (FR); PASQUIER, Frédéric, F-35890 Laillé (FR)
(74) Mandataire: Kerber, Thierry
(86) Numéro de dépôt international: PCT/EP2003/050273
(87) Numéro de publication internationale: WO 2004/004336

(56) Documents cités:
- WO-A-01/60061
- WO-A-01/72040
- US-A- 4 230 990
- US-A- 5 485 518
- DAKSS J ET AL: "HYPERLINKED VIDEO" PROCEEDINGS OF THE SPIE, SPIE, BELLINGHAM, VA, US, vol. 3528, novembre 1999 (1999-11), pages 2-10, XP000986761 ISSN: 0277-786X

## Description

La présente invention se rapporte à un système et un procédé de synchronisation pour programmes audiovisuels, ainsi qu'à des dispositifs et procédés associés. Elle est notamment relative à des unités et à des procédés de reconnaissance et de spécification de signaux de synchronisation.

La télévision interactive permet à un téléspectateur d'agir sur le déroulement des émissions qu'il regarde. Il peut ainsi interagir avec des services interactifs. Pour ce faire, des terminaux grand-public interactifs sont connectés à un double réseau de communication :
- un réseau bidirectionnel (voie de retour modem, câble...) de type point à point, comme notamment un réseau téléphonique, mettant en oeuvre un ou plusieurs serveurs point à point,
- et un réseau de distribution unidirectionnel, tel que notamment un réseau de diffusion TV hertzien, par câble ou par satellite, mettant en oeuvre un ou plusieurs serveurs de diffusion générale ; par « diffusion générale » ou broadcasting, on entend la transmission de données identiques vers un ensemble de destinations, que celle-ci soit notamment effectuée par radiodiffusion, par le câble ou par Internet.

Les terminaux considérés sont par exemple constitués de récepteurs de télévision, de décodeurs DVB (pour « Digital Video Broadcasting ») ou de décodeurs Internet. Les services interactifs sont généralement téléchargés dans les terminaux par diffusion générale via le réseau unidirectionnel. Dans d'autres cas, ils sont hébergés par des serveurs accessibles par le réseau téléphonique. On accède alors à ces services à travers des références ou des adresses Web (encore appelés URL pour « Universal Resource Locator », ou adresses universelles) diffusées en complément d'un programme audiovisuel. Elles déterminent le serveur auquel doivent s'adresser les terminaux ainsi que le service à solliciter sur ce serveur. Les programmes audiovisuels diffusés de manière synchrone soit avec les services, soit avec des URL des services, sont alors désignés par « programmes enrichis ».

En pratique, les techniques connues de télévision interactive reposent sur les opérations qui suivent. On diffuse au moyen d'un centre de diffusion générale, ou « broadcaster », un service interactif issu d'un opérateur de services, de manière synchronisée à un programme audiovisuel (réseau unidirectionnel). A cet effet, on embarque des données relatives à ce service avec des signaux audiovisuels propres à ce programme. Lorsqu'un terminal interactif reçoit le programme enrichi ainsi obtenu, il diffuse à l'écran (image et son) le programme audiovisuel et interprète les données du service interactif. Il présente alors ce dernier à l'écran en synchronisation avec le programme audiovisuel, typiquement sous forme d'un affichage graphique ou textuel en surimpression de la vidéo.

Un téléspectateur peut ensuite interagir avec le service interactif, cette interaction pouvant mener à l'établissement d'une connexion avec un serveur de l'opérateur de services (réseau bidirectionnel).

Un des aspects essentiels de la télévision interactive concerne la mise en place et la gestion de la synchronisation entre les programmes et les données de services interactifs. En particulier, il est généralement prévu de diffuser en boucle (carrousel) le contenu interactif ou son URL pendant la durée du programme audiovisuel associé. On utilise habituellement pour la synchronisation deux équipements du broadcaster :
- un système de trafic, qui crée une liste d'exécution d'événements (« playlist ») comprenant des informations de temps (heure de début et heure de fin), d'objet (dispositif à piloter) et d'opération (commande à exécuter) ;
- et un système d'automation, qui gère la liste d'exécution pour piloter et commander des équipements de diffusion du broadcaster (serveurs vidéo, magnétoscopes, appareils de sous-titrage...).

Le système de trafic permet de procéder à des modifications de la liste d'exécution en cas de modifications significatives dans l'organisation temporelle des programmes. Le système d'automation est quant à lui capable de réajuster la liste en cas de modifications minimes de dernière minute, et de réorienter la liste vers le système de trafic si des modifications plus conséquentes sont requises.

La synchronisation des services interactifs avec les programmes est obtenue en intégrant un serveur de diffusion générale (qui fait office de serveur d'applications interactives) parmi les dispositifs à piloter par le système d'automation. L'opérateur de service est supposé être connecté en permanence au serveur de diffusion du broadcaster, afin d'être notifié de la diffusion effective des contenus programmés. Il s'agit d'une liaison du type TCP-IP (pour « Transmission Control Protocol / Internetwork Protocol ») ou autre sur laquelle peut être déployée une couche d'un applicatif particulier. Cette liaison sert dans un sens à programmer le serveur de diffusion à partir d'applications d'administration présentes chez l'opérateur de service, et dans l'autre sens à informer l'opérateur de services notamment de l'état du serveur de diffusion, de la progression de diffusions de contenus et d'éventuels incidents.

On évite ainsi des problèmes de désynchronisation entre la diffusion des programmes et celles de contenus interactifs associés. En effet, si un programme audiovisuel est retardé ou avancé, la liste d'exécution est mise à jour par le broadcaster. De la sorte, les dispositifs utilisés - y compris le serveur de diffusion - se déclenchent aux moments appropriés.

Cependant, une telle technique nécessite l'intervention du broadcaster, qui doit modifier ses listes d'exécution d'événements pour prendre en compte des événements liés à la diffusion de services interactifs. De plus, elle requiert une convention entre le broadcaster et l'opérateur de services, afin qu'ils s'entendent sur des commandes relatives à la diffusion de tels services.

Il a également été proposé diverses méthodes dans lesquelles on insère dans le programme audiovisuel lui-même des signaux de synchronisation. Ainsi, le document WO-01/50764 décrit un procédé informatique pour l'exploitation d'une émission de télévision numérique interactive, dans lequel on détecte des signaux de service correspondant à des séquences « top de synchronisation », qui provoquent le déchargement d'une application multimédia. Dans le brevet US-5.818.440, une application interactive est téléchargée dans un réseau de télévision interactive, et cette application est automatiquement mise en route lors de la détection d'un jeton (token) d'application incorporé dans le programme vidéo.

De telles réalisations nécessitent elles aussi l'intervention d'un diffuseur ou d'un fournisseur de services pour insérer le flux de signaux de synchronisation appropriés, et ont donc un caractère intrusif.

Ces difficultés sont résolues par l'invention divulguée dans le document WO-01/91462. Cette antériorité décrit un dispositif de synchronisation de programmes audiovisuels diffusés et d'informations complémentaires. Le dispositif comprend un ensemble de détection d'images et/ou de sons, capable d'extraire au moins un élément sémantique du contenu d'un programme audiovisuel en cours de diffusion. Il comprend aussi une unité de reconnaissance de ces éléments sémantiques, reliée à un guide de programmes qui comprend une liste ordonnée chronologiquement d'ensembles d'informations associés aux programmes audiovisuels. L'unité de reconnaissance, préparée par un apprentissage préalable, sélectionne l'ensemble d'informations qui est le plus probablement corrélé à ces éléments sémantiques. Un bloc de synthèse synchronise alors les programmes audiovisuels avec les ensembles d'informations sélectionnés.

Cette invention requiert cependant des moyens complexes et nécessite la référence à un guide de programmes.

La demande de brevet WO-02/21840 propose une méthode de synchronisation d'un client avec un signal de média. Selon un mode de réalisation de cette méthode, on reçoit une ou plusieurs actions correspondant à un signal audiovisuel (le signal de média), on détermine une application pour effectuer les actions (par exemple par analyse syntaxique - ou « parsing » - d'information d'actions), et on déclenche une mise en route des actions par cette application. Dans les exemples décrits, un opérateur définit des actions qu'il envoie à un serveur, qui lui-même les transmet par broadcasting via Internet à des clients. Soit les actions envoyées doivent être exécutées dès leur réception, soit elles sont accompagnées d'informations temporelles qui permettent de déterminer à quels moments les exécuter.

Un inconvénient de cette méthode est qu'elle requiert des opérations relativement complexes pour la synchronisation, soit sous forme d'interventions d'un opérateur aux moments voulus, soit sous forme d'une préparation préalable permettant de déclencher les envois des actions aux moments opportuns.

Le document WO-01/82623 divulgue l'insertion automatique de messages de déclenchement (« triggers ») de TV interactive dans un flux de données audiovisuelles. L'insertion peut notamment se fonder sur la reconnaissance d'éléments particuliers dans le flux, tels que des échantillons audio/vidéo stockés dans une base de données. De plus, cette insertion peut être déclenchée avant ou après broadcasting du flux. La description mentionne également l'utilisation d'une table de repérage comprenant des liens entre d'une part les échantillons à trouver, et d'autre part des éléments interactifs et attributs associés, tels que par exemple le numéro de chaîne.

Cette technologie, très souple, suppose cependant une acquisition préalable des éléments de reconnaissance, qui doivent être rendus disponibles pour le système d'insertion automatique. Or, l'antériorité WO-01/82623 ne décrit pas le mode d'obtention de ces éléments. Une personne du métier cherchant à mettre en oeuvre une telle acquisition pourrait alors envisager plusieurs méthodes.

Une première méthode d'acquisition s'appliquerait dans le cas d'une insertion des triggers en amont du broadcasting. Un opérateur visionnerait à l'avance les programmes concernés, sélectionnerait des éléments significatifs à reconnaître et les enregistrerait dans une base accessible directement par le système d'insertion automatique. Ce type de réalisation est cependant restreint à des insertions de triggers avant broadcasting, et implique une communication étroite entre l'opérateur et le broadcaster.

Une deuxième méthode d'acquisition consisterait à enregistrer les éléments de reconnaissance dans un support de stockage portable, tel que par exemple une cassette, un disque dur ou un DVD (pour « Digital Versatile Disk »), puis à mettre le support à disposition de l'utilisateur du système d'insertion automatique. Cette méthode présente par rapport à la première l'avantage d'être applicable dans un cadre plus vaste, et peut théoriquement être exploitée non seulement par un broadcaster, ne bénéficiant pas nécessairement d'accès immédiat à des ressources communes de stockage avec l'opérateur, mais aussi par un utilisateur final d'un décodeur vidéo.

Cependant, elle contraint à des transmissions matérielles des supports de stockage et n'autorise pas de modifications souples des éléments de reconnaissance. Son champ d'application pratique s'avère donc également assez restreint.

Une troisième méthode d'acquisition consisterait à transmettre les éléments de reconnaissance par télétransmission, via un réseau de communications. Cette solution, qui offre une grande souplesse et permet d'exploiter un système d'insertion automatique aussi bien en amont qu'en aval du broadcasting, est cependant pénalisée par les besoins en ressource de transmission. En effet, pour être signifiants, les éléments de reconnaissance risquent dans de nombreux cas d'être relativement volumineux, portant sur des portions de contenus audiovisuels. Leur transmission implique alors des coûts significatifs en bande passante, empiétant sur les ressources de communication. Par exemple, pour transmettre des images complètes dans un environnement de télévision analogique, on ne dispose que d'une bande passante de quelques dizaines de k-octets /seconde.

Le document WO-01/60061 décrit une technique d'enregistrement de programmes avant ou après des instants prédéfinis pour des enregistrements. Pour ce faire, une ou plusieurs « signatures » sont générées à partir d'un signal vidéo associé à un programme diffusé à enregistrer. Le traitement de ces signatures permet de déterminer des instants de début et de fin des programmes à enregistrer. Les signatures peuvent être exploitées selon les deux types de réalisations distinctes ci-après, pouvant être éventuellement associées.

Dans un premier type de réalisations, un utilisateur définit ou obtient un ou plusieurs éléments de référence, auxquels sont comparées ensuite les signatures du signal vidéo reçu. Lorsqu'une coïncidence des signatures et des éléments est constatée; l'enregistrement est déclenché ou stoppé. Dans le second type de réalisations, la signature du signal vidéo reçu est calculée périodiquement et on s'intéresse à son évolution. Lorsqu'une variation significative de la signature est observée, on en déduit qu'un changement de programme s'est produit et on déclenche ou on stoppe l'enregistrement.

Le premier type conduit aux difficultés mentionnées plus haut pour l'acquisition préalable des éléments de reconnaissance. Le second type de réalisations rend quant à lui nécessaire des calculs périodiques de signatures en temps réel, ce qui entraîne des contraintes en termes de complexité et de coûts de calculs. De plus, cette technique requiert inévitablement une marge d'incertitude sur l'écart à prendre en compte dans les signatures pour décider de déclencher le début ou la fin d'un enregistrement.

La présente invention concerne un système et un procédé de synchronisation de programmes audiovisuels et de services interactifs, pouvant permettre de n'être aucunement intrusif vis-à-vis de broadcasters et d'opérateurs de services, tout en autorisant une mise en oeuvre simple et fiable et en évitant le recours à un guide de programmes. Le système et le procédé de l'invention rendent possibles des applications larges, aussi bien en amont qu'en aval de la diffusion générale des programmes, modifiables avec souplesse, et sans pénaliser les ressources en bande passante de communications.

Le système et le procédé de synchronisation de l'invention s'appliquent également à d'autres types de synchronisation relatifs à des programmes audiovisuels, notamment pour des enregistrements automatiques de films ou d'émissions, ou des substitutions automatiques de contenus de programmes audiovisuels (l'utilisateur pouvant par exemple décider à l'avance un remplacement en temps réel à l'écran d'une certaine catégorie de programmes par une autre, au moyen d'une sélection parmi plusieurs sources de diffusion). Qui plus est, ils concernent également des émissions de radio. Par la suite et pour simplifier, y compris dans la définition de l'invention, l'expression « programme audiovisuel » vise des programmes audio et/ou vidéo.

L'invention a également pour objet des unités et des procédés de spécification et de reconnaissance de signaux de synchronisation, utilisables pour le système de synchronisation de l'invention et pouvant offrir les avantages précités.

Elle vise également un centre de diffusion générale (broadcaster), un opérateur de service, un terminal (interactif ou non) de réception de programmes audiovisuels et un logiciel, associés à l'un au moins des objets de l'invention mentionnés ci-dessus.

A cet effet, l'invention a pour objet une unité de reconnaissance de signaux de synchronisation dans au moins un programme audiovisuel reçu, ce programme audiovisuel comprenant un contenu audiovisuel destiné à être diffusé à des utilisateurs (c'est-à-dire matérialisé sous forme visuelle ou auditive) et des informations de contrôle. L'unité de reconnaissance est conforme à la revendication 1.

L'unité de reconnaissance de l'invention est donc capable de détecter des signaux de synchronisation sans qu'aucune modification ne soit apportée aux programmes audiovisuels, par analyse directe du contenu audiovisuel (tel qu'images, sons, parties de ces derniers ou combinaisons) diffusé aux utilisateurs. Ainsi, par contraste avec les procédés intrusifs consistant à intervenir sur les listes d'exécution d'événements, aucune modification de ces listes n'est nécessaire. On réduit en particulier de la sorte les risques de diffusion d'un service interactif sur un programme audiovisuel qui ne correspondrait pas. En effet, grâce à la reconnaissance portant sur le contenu, une erreur a une faible possibilité de se produire, tandis qu'avec les procédés ci-dessus, ces risques sont considérablement accrus par la manipulation d'entités d'identification et la présence d'un tiers fournissant des informations non vérifiables par l'opérateur de services (identificateur du programme).

De plus, contrairement aux techniques reposant sur la reconnaissance de signaux de détection spécifiques incorporés dans les flux de programmes audiovisuels transmis, aucune action sur les signaux porteurs de ces programmes n'est requise.

Qui plus est, par rapport à la technique divulguée dans la demande de brevet WO-01/91462, les éléments de reconnaissance sont au préalable communiqués à l'unité de reconnaissance, ce qui permet d'éviter le recours à des techniques complexes d'identification associées à un guide de programmes.

De plus, l'unité de reconnaissance de l'invention contraste avec l'enseignement de l'antériorité WO-01/82623 par le mode d'obtention des éléments de reconnaissance. Alors que ce document reste silencieux sur les moyens d'acquisition à mettre en oeuvre, et qu'une personne du métier adopterait l'une des solutions mentionnées plus haut, la présente unité de reconnaissance est capable de tirer parti d'une diffusion préalable d'un programme audiovisuel via le réseau de diffusion générale. Le module de réception des flux transmis est alors exploité comme part du module de réception d'éléments de reconnaissance.

Ainsi, les informations à transmettre spécifiquement pour l'acquisition des portions de contenu audiovisuel peuvent se réduire à des données complémentaires portant sur les modalités d'extraction de ces portions (canal, date, type de données...). L'unité de reconnaissance peut ainsi cumuler large plage d'application, souplesse et faible quantité de bande passante requise.

La mise en oeuvre de l'invention suppose cependant que la portion de contenu utilisée soit diffusée dans un programme audiovisuel, préalablement au programme sur lequel doit se caler la synchronisation. Cette contrainte, qui peut paraître assez restrictive, s'avère en pratique vérifiable dans un très grand nombre de cas. En effet, la portion de contenu peut être extraite notamment d'un générique d'émission ou de série ou d'un motif publicitaire (par exemple bandeau publicitaire), qui sont diffusés périodiquement. Par ailleurs, la précision dans l'instant d'acquisition de l'image ou du son à enregistrer n'est généralement pas capitale. De fait, on s'attache dans les cas usuels cités ci-dessus à une séquence déterminée, dont n'importe quelle portion extraite apte à servir de repérage peut convenir.

De plus, l'unité de reconnaissance de l'invention inclut avantageusement des capacités de temporisation, explicitées ci-dessous, qui permettent de déclencher des actions après des durées prédéfinies suivant le moment de détection dans un programme de la portion de contenu. Ainsi, n'importe quel moment d'une émission peut faire l'objet d'une opération synchronisée, dans la mesure où des instants initiaux déterminés de cette émission (ou des instants antérieurs à cette émission) peuvent être repérés.

Au regard des techniques connues et des méthodes semblant assez logiquement s'appliquer à l'acquisition des éléments de reconnaissance, l'exploitation de programmes préalablement diffusés via le réseau de diffusion générale apparaît particulièrement surprenante. On s'attendrait en effet à une mise à disposition spécifique et groupée de l'ensemble des informations nécessaires pour la détection des signaux de synchronisation, y compris les portions de contenu à identifier. Par contraste, les portions de contenus ne sont pas ici communiquées ou accessibles explicitement et spécifiquement, mais de manière incidente et implicite à travers une transmission non dédiée à la synchronisation.

Dans la définition de l'unité de reconnaissance, comme dans le reste de la demande, les « unités » et « modules » sont à comprendre dans un sens fonctionnel, et ne sont donc pas limités à des matérialisations particulières. Ainsi, ils peuvent être notamment regroupés dans un même composant ou un même logiciel, ou au contraire être répartis dans différents composants. Par ailleurs, l'unité de reconnaissance peut être installée côté diffusion (typiquement chez le broadcaster), côté opérateur de service, ou dans un terminal de réception de programmes audiovisuels, de préférence interactif, sous forme embarquée.

Les éléments de reconnaissance reçus et/ou les portions extraites peuvent s'appliquer à un ou à plusieurs programmes, diffusés simultanément ou successivement. Par exemple, des programmes étant récurrents dans le temps, il suffit d'acquérir des images une seule fois pour qu'une synchronisation soit effectivement programmée.

Selon différentes modalités des instructions d'extraction utilisées par l'unité de reconnaissance pour un type de détection donné :
- les instructions portent sur une image complète, à partir de laquelle doit s'effectuer la détection ;
- les instructions portent sur une sous-image ; les éléments de reconnaissance contiennent alors les coordonnées d'une zone à détecter ; cette solution est moins coûteuse en ressources que la précédente, tant en termes de stockage que de temps de traitement requis pour la détection ;
- les instructions portent sur un groupe d'images ou de parties d'images ; à titre d'exemples, le déclenchement d'une action est alors tributaire de la détection de toutes les entités du groupe, ou au contraire de la détection d'au moins l'une d'entre elles ;
- les instructions portent sur un ensemble de sons diffusés pendant une durée déterminée.

De manière générale, chacune des portions de contenu est de préférence constituée d'au moins une des portions suivantes : une image, un son et une combinaison quelconque d'au moins deux de ces portions.

Préférentiellement, le module de réception des éléments de reconnaissance est prévu pour recevoir un message de déclenchement (trigger) et le module d'enregistrement est prévu pour extraire et enregistrer dès réception de ce message de déclenchement, la portion du flux préalablement reçu. L'utilisation d'un tel trigger est particulièrement efficace et simple à mettre en oeuvre. De plus, le trigger est avantageusement un message de déclenchement de type particulier, indiquant le type de portion de contenu à extraire et le canal visé. Dans une variante, ces informations ont été envoyées auparavant. Comme indiqué plus haut, une grande précision dans la synchronisation de cet enregistrement de portion n'est généralement pas nécessaire.

Selon une réalisation améliorée de l'unité de reconnaissance, le module de réception des éléments de reconnaissance est aussi prévu pour recevoir parmi les éléments de reconnaissance, au moins un identificateur de la portion extraite, et le module de détection est capable de récupérer dans l'espace de stockage cette portion extraite préalablement enregistrée et associée à cet identificateur, pour reconnaître dans le contenu du programme audiovisuel reçu cette portion extraite.

Cette réalisation permet notamment d'éviter des opérations multiples d'extractions (économie de ressources locales) ou de transmissions (économie de bande passante) d'une même portion extraite, une fois accomplie l'étape initiale d'acquisition de cette portion. De plus, y compris en cas d'utilisation unique d'une portion extraite, elle permet d'anticiper sur des instructions ultérieures de reconnaissance. En effet, il se peut qu'une séquence significative pour la détection soit diffusée dans un programme, sans que l'usage précis qui en sera fait ultérieurement soit encore établi précisément (par exemple, les modalités d'exploitation pour l'interactivité ne sont pas encore connues).

Les éléments de reconnaissance ultérieurs spécifiant l'exploitation de la portion enregistrée peuvent comprendre des données de reconnaissance telles que notamment plage temporelle, canal de diffusion et/ou opérateur booléen, éventuellement accompagnées d'informations d'actions et/ou de temporisation. Ainsi, les éléments de reconnaissance dans leur totalité sont avantageusement obtenus en au moins deux étapes successives : instructions d'extraction de portions de contenus, puis instructions d'exploitations de ces portions (ces portions pouvant ou non être déjà acquises lors de la réception des instructions d'exploitation).

Dans une forme particulière de cette réalisation avec identificateur de portion, les modules de réception et d'enregistrement sont aptes à recevoir et stocker des portions extraites exploitables pour plusieurs types de détection distinctes. Chaque portion ou ensemble de portions est alors spécifiée par un identificateur univoque de portion, exploitable par les différents types de détection. Cette pluralité des types de détection est apte à procurer de manière simple à la fois souplesse et complexité dans les opérations de synchronisation.

Avantageusement, le module de réception des éléments de reconnaissance est aussi capable de recevoir directement la portion extraite parmi les éléments de reconnaissance et le module d'enregistrement est prévu pour enregistrer cette portion extraite dans l'espace de stockage.

On intègre ainsi cette fonctionnalité pouvant être coûteuse en bande passante, mais à titre de solution de remplacement lorsque l'extraction préalable dans un programme diffusé n'est pas possible. Dans certains cas, en effet, on ne parvient pas à identifier de programme diffusé à l'avance dans lequel on pourrait extraire un motif approprié en vue d'une détection ultérieure souhaitée. L'existence de cette option procure un système global très avantageux, par sa capacité à couvrir l'ensemble des situations tout en conservant (pour bon nombre de ces situations) l'atout d'une réduction potentielle considérable en bande passante requise.

Ces derniers avantages combinés sont particulièrement intéressants si l'unité de reconnaissance est implémentée dans un terminal, ou plus généralement en aval d'un réseau de communication étendu prévu pour supporter le transport des portions extraites.

Selon une réalisation préférée, l'unité de reconnaissance regroupe les capacités des trois types d'acquisition de portions de contenus mentionnés plus haut :
- extraction de la portion de contenu dans au moins un flux d'un programme audiovisuel préalablement reçu par le module de réception de flux, selon des instructions d'extraction incluses dans les éléments de reconnaissance ;
- transmission directe à l'unité de reconnaissance, de la portion de contenu incluse dans les éléments de reconnaissance ; les portions extraites sont avantageusement transmises par une unité spécifique (telle que celle définie ci-après comme « unité de spécification ») ;
- et récupération en espace de stockage de la portion de contenu, à partir d'un identificateur de portion extraite inclus dans les éléments de reconnaissance.

Préférentiellement, l'unité de reconnaissance comprend aussi un module de temporisation avant envoi des instructions d'actions par le module de transmission.

Le module de temporisation introduit un délai avant la transmission des instructions d'actions lorsque les signaux de synchronisation sont détectés dans le programme audiovisuel. L'utilisation de ce délai est particulièrement intéressante, dans la mesure où elle permet de caler la synchronisation sur un événement pouvant être anticipé, puis de doser l'écart temporel entre cette synchronisation et un ou plusieurs moments opportuns, afin de déclencher à ces moments les actions à synchroniser. De plus, l'exploitation du délai favorise considérablement l'acquisition de la portion de contenu à partir d'un programme diffusé au préalable. En effet, elle permet de se caler sur une séquence prévue pour être répétée lors de transmissions successives, telle qu'un générique.

Ainsi, notamment, une émission en direct étant généralement précédée - ou même ponctuée - de publicité, on peut caler la détection sur un générique de fin de bandeau publicitaire (préalablement enregistré à partir d'une diffusion antérieure) et régler la temporisation pour qu'un service interactif s'affiche par exemple 10 minutes après le démarrage de l'émission (à titre d'illustration, le temps pour un animateur d'annoncer la possibilité d'interagir avec son téléviseur).

Cette technique peut permettre en particulier à un opérateur de services de gérer des opérations de synchronisation, y compris sur des émissions diffusées en direct, sans devoir demander à une chaîne diffusant les émissions d'être partie prenante de ces opérations. Il suffit en effet que la chaîne fournisse un mode d'acquisition d'un échantillon, tel que par exemple une image d'un bandeau publicitaire, et un timing approximatif pour le déclenchement d'actions souhaitées, par exemple l'apparition d'une interactivité. Cette réalisation rend notamment possible une synchronisation de la diffusion de services interactifs, sur des programmes audiovisuels qui sont conçus *a priori* sans aucune interactivité.

A une détection donnée des éléments de synchronisation, peuvent correspondre plusieurs temporisations définissant des instants successifs. Les modules de temporisation et de transmission sont alors aptes à utiliser un instant de détection comme un temps de référence, à partir duquel le module de temporisation détermine plusieurs instants de déclenchement d'envois d'instructions d'actions. Dans une version sophistiquée, le module de temporisation est apte à combiner des informations plus complexes qu'un unique instant de détection et des durées prédéfinies pour déterminer ces instants de déclenchement. De telles informations peuvent notamment consister en :
- plusieurs instants de détection (par exemple deux instants de détection servent à spécifier au moins trois instants de déclenchement d'envoi d'instructions),
- des opérateurs portant sur les signaux de synchronisation détectés (par exemple, des portions extraites distinctes sont associées respectivement à différents groupes de délais) ;
- des plages horaires de détection (par exemple, les délais sont plus courts si les détections s'effectuent durant des plages horaires plus tardives) ;
- ou une combinaison quelconque des informations ci-dessus.

De préférence, les modules de réception et d'enregistrement des éléments de reconnaissance dans l'unité de reconnaissance sont prévus pour respectivement recevoir et enregistrer aussi au moins un délai de temporisation et le module de temporisation est prévu pour utiliser ce délai. Selon d'autres réalisations, le délai est prédéfini, ou déterminé localement par l'utilisateur.

Avantageusement, les modules de réception et d'enregistrement d'éléments de reconnaissance et le module de transmission d'instructions d'actions sont prévus pour respectivement recevoir, enregistrer et transmettre des identificateurs relatifs aux actions à déclencher. On spécifie ainsi à la fois les critères de reconnaissance et les actions à effectuer.

Dans une forme préférée de communication des identificateurs d'actions, éléments de reconnaissance et identificateurs d'actions sont reçus conjointement sous forme de couples, chacun de ces couples comprenant un ensemble d'éléments de reconnaissance et un identificateur d'actions associé.

Dans d'autres modes de réalisation, les identificateurs d'actions sont reçus séparément et s'appliquent à toutes les détections ultérieurement effectuées avec les éléments de reconnaissance successivement transmis. Dans encore d'autres modes de réalisation, les actions à déclencher sont prédéfinies, ou décidées par des utilisateurs indépendamment des opérations de reconnaissance.

Dans une première forme avantageuse des éléments de reconnaissance, ceux-ci incluent au moins un opérateur booléen. Le module de détection est alors prévu pour détecter au moins deux des portions de contenu en relation avec cet opérateur booléen (tel que notamment « et » ou « ou ») et le module de transmission est prévu pour transmettre les instructions d'action en cas d'une telle détection.

Par exemple, on combine des identifications associées à des identificateurs d'actions de la manière suivante :
- Si (détection image 1 ET détection image 2), alors déclenchement action 1,
- Si (détection image 3 OU détection image 4), alors déclenchement action 2.

Dans une deuxième forme avantageuse des éléments de reconnaissance, ceux-ci incluent au moins une information de temps. Le module de détection est alors prévu pour détecter les portions de contenu en relation avec cette information de temps et le module de transmission est prévu pour transmettre les instructions d'action en cas d'une telle détection. De préférence, cette information de temps comprend au moins une information choisie parmi une date de détection et une plage temporelle de détection.

Par exemple, on combine la détection des portions de contenus à des tests sur la date courante :
- Si (détection image 1 ET détection image 2), alors déclenchement service1,
- Si (détection image 3 ET current_date() == 06092002), alors déclenchement enregistrement.

Des formes de réalisation particulièrement intéressantes des éléments de reconnaissance porteurs d'informations temporelles concernent la délimitation de la période d'activation pour la détection des portions de contenu.

Par exemple, on indique pour chaque détection une date / heure de début et une date / heure de fin de détection, ce qui permet de restreindre le nombre de comparaisons à effectuer pour chaque élément de reconnaissance reçu. Cette technique est notamment intéressante pour la diffusion de services interactifs. En effet, l'heure de diffusion d'un programme audiovisuel est généralement connue à quelques minutes près et on ne diffuse qu'un seul service à la fois, de telle sorte que la programmation d'une seule détection à un instant donné est suffisante pour déclencher la diffusion de ce service.

Selon d'autres modalités de réalisation (avantageusement combinées) :
- la recherche commence immédiatement après l'acquisition de la portion selon les instructions d'extraction, et cesse à une certaine date indiquée dans les éléments de reconnaissance ;
- la recherche commence sous l'effet d'un trigger de début et cesse sous l'effet d'un trigger de fin, ces triggers de début et de fin se référant de préférence au type de détection visé, au moyen d'au moins un identificateur de portion extraite ;
- et/ou la recherche est activée et/ou désactivée par la détection d'au moins une portion de contenu auxiliaire ; cette portion auxiliaire peut être choisie beaucoup plus réduite que la portion de contenu principale (par exemple logo de publicité), ce qui rend cette solution assez intéressante pour restreindre les opérations CPU (pour « Central Processing Unit ») nécessaires.

Dans une troisième forme avantageuse des éléments de reconnaissance, ceux-ci incluent au moins une référence de canal. Le module de détection est alors prévu pour détecter les portions de contenu en relation avec cette référence de canal et le module de transmission est prévu pour transmettre les instructions d'action en cas d'une telle détection.

En transmettant une information de chaîne sur laquelle la détection doit se faire, on évite de solliciter inutilement l'unité de reconnaissance lorsque aucune détection n'est programmée sur la chaîne courante. Ce supplément d'information permet aussi de programmer une détection sur une chaîne en particulier, l'élément de reconnaissance à détecter pouvant être diffusé sur plusieurs chaînes - par exemple un spot publicitaire. Par défaut et sans aucune information de chaîne, la détection est de préférence activée en permanence et sans distinction de chaîne.

Dans des modes de réalisation avantageux, la détection des signaux de synchronisation repose sur la reconnaissance de plusieurs portions de contenu, ou sur le croisement de reconnaissance de telles portions avec d'autres types d'informations (chaîne, variable du système comme la date courante, éventuellement guide de programme...). Ainsi, on utilise avantageusement plusieurs images en cas d'incertitude sur le contenu du programme ou afin de multiplier les chances de détection du programme, la détection de l'une des images déclenchant le processus d'action.

L'invention concerne aussi une unité de spécification de signaux de synchronisation associés à au moins un programme audiovisuel, ce (ou ces) programme(s) audiovisuel(s) comprenant un contenu audiovisuel destiné à être diffusé à des utilisateurs et des informations de contrôle, et les signaux de synchronisation étant destinés à être détectés dans au moins un flux transmis porteur de ce programme audiovisuel et transmis via un réseau de diffusion générale et à déclencher ainsi au moins une action.

Selon l'invention, l'unité de spécification comprend :
- un module de préparation d'éléments de reconnaissance permettant d'obtenir au moins une portion extraite du contenu du programme audiovisuel,
- et un module de transmission des éléments de reconnaissance indépendamment de transmissions du programme audiovisuel, à au moins une unité de reconnaissance destinée à détecter les signaux de synchronisation dans le flux transmis porteur du programme audiovisuel, en reconnaissant la (ou les) portion(s) extraite(s) dans le contenu du programme audiovisuel.

Les modules de préparation et de transmission de cette unité de spécification sont prévus respectivement pour préparer et transmettre des instructions d'extraction, dans au moins un flux d'un programme audiovisuel préalablement reçu par l'unité de reconnaissance via le réseau de diffusion générale, de la portion de contenu. Cette portion est extraite du programme audiovisuel préalablement reçu.

Cette unité de spécification est préférentiellement capable de coopérer avec l'un quelconque des modes de réalisation de l'unité de reconnaissance de l'invention.

De préférence, les modules de préparation et de transmission de cette unité de spécification sont prévus respectivement pour préparer et transmettre des identificateurs relatifs aux actions à déclencher en cas de détection des signaux de synchronisation.

Les identificateurs d'actions sont alors avantageusement relatifs à au moins une des actions suivantes: diffusion d'un service interactif, déclenchement d'un service interactif, déclenchement d'une mise à jour d'un service interactif, déclenchement d'un enregistrement du programme audiovisuel et connexion à un site Web. La première action est plus spécifiquement destinée à une détection de signaux de synchronisation au niveau d'un broadcaster ou d'un opérateur de services, tandis que les trois dernières actions sont typiquement applicables dans le cas où la reconnaissance est effectuée dans un terminal de réception de programmes audiovisuels (par exemple déclenchement d'un service embarqué, pouvant consister en le déclenchement de son apparition).

Selon des modes de réalisation avantageux concernant l'obtention de la portion extraite:
- tes modules de préparation et de transmission sont tels que les éléments de reconnaissance peuvent inclure cette portion extraite ;
- et/ou les modules de préparation et de transmission sont tels que les éléments de reconnaissance peuvent inclure au moins un identificateur de cette portion extraite préalablement enregistrée dans l'espace de stockage.

L'invention s'applique également à un système de synchronisation tel que défini dans la revendication 15, comprenant une unité de spécification de signaux de synchronisation, une unité de reconnaissance des signaux de synchronisation, et une unité d'activation prévue pour déclencher au moins une action en cas de détection des signaux de synchronisation par l'unité de reconnaissance.

L'unité de reconnaissance et/ou l'unité de spécification sont préférentiellement conformes à l'un quelconque des modes de réalisation de l'inventon.

L'invention a aussi pour objets un centre de diffusion générale, un opérateur de services et un terminal de réception de programmes audiovisuels, comprenant un module de spécification, un module de reconnaissance et/ou un système de synchronisation conformes à l'un quelconque des modes de réalisation de l'invention.

Dans le cas où l'unité de reconnaissance est dans un terminal de réception, selon une mise en oeuvre avantageuse, on transmet avantageusement en avance de phase au terminal, des éléments de reconnaissance et des services interactifs associés. Lorsque par exemple aucune interactivité n'est proposée aux téléspectateurs, cela permet d'augmenter la proportion de téléviseurs capables de proposer de l'interactivité. Le terminal dispose alors préférentiellement de moyens de stockage des éléments de reconnaissance, des portions extraites et des services interactifs dans de la mémoire permanente, par exemple de type flash. Cette réalisation permet de programmer des synchronisations persistantes à des interruptions et mises en route (switch off/on) du terminal. On augmente de cette manière les chances de proposer de l'interactivité malgré un arrêt provisoire complet du système.

Dans un premier mode d'envoi des éléments de reconnaissance et des services associés à un terminal comprenant une unité de reconnaissance, on transmet conjointement (en avance de phase) une ou plusieurs associations d'ensembles d'éléments de reconnaissance et de services interactifs correspondants, préférentiellement par diffusion générale. L'envoi de plusieurs associations de ce type destinées à être exploitées en parallèle est complété en communiquant des identificateurs d'actions couplés aux ensembles d'éléments, ces identificateurs précisant quels sont les services à lancer.

Dans un deuxième mode d'envoi des éléments de reconnaissance et des services associés à un terminal comprenant une unité de reconnaissance, on dissocie l'envoi des éléments de reconnaissance et des services. Des identificateurs d'actions sont alors joints aux éléments de reconnaissance afin de faire correspondre ces derniers aux services à lancer.

L'invention concerne aussi un procédé d'activation par reconnaissance de signaux de synchronisation dans au moins un programme audiovisuel reçu, conforme à la revendication 19. Ce procédé de reconnaissance est préférentiellement mis en oeuvre au moyen d'une unité de reconnaissance conforme à l'une quelconque des formes de l'invention.

L'invention concerne de plus un procédé de spécification de signaux de synchronisation et un procédé de synchronisation respectivement conformes aux revendications 20 et 21. Ces procédés sont préférentiellement mis en oeuvre respectivement au moyen d'une unité de spécification et d'un système de synchronisation conformes à l'une quelconque des formes de l'invention.

L'invention a aussi pour objet un produit programme d'ordinateur, caractérisé en ce qu'il comprend des instructions de code de programme pour l'exécution des étapes de l'un des procédés selon l'invention lorsque ce programme est exécuté sur un ordinateur. Par « produit programme d'ordinateur », on entend un support de programme d'ordinateur, qui peut consister non seulement en un espace de stockage contenant le programme, tel qu'une disquette ou une cassette, mais aussi en un signal, tel qu'un signal électrique ou optique.

L'invention sera mieux comprise et illustrée au moyen des exemples suivants de réalisation et de mise en oeuvre, nullement limitatifs, en référence aux figures annexées sur lesquelles :
- la Figure 1 est un schéma de principe d'un système de synchronisation conforme à l'invention ;
- la Figure 2 représente une unité de spécification du système de synchronisation de la Figure 1;
- la Figure 3 représente une unité de reconnaissance du système de synchronisation de la Figure 1 ;
- la Figure 4 représente une unité d'activation du système de synchronisation de la Figure 1;
- la Figure 5 illustre schématiquement un réseau de communication comprenant un centre de diffusion générale (ou broadcaster) avec serveur de diffusion, un opérateur de services avec serveur point à point et un terminal grand public, interactif ou non ;
- la Figure 6 montre l'évolution temporelle d'une diffusion de services en carrousel ;
- la Figure 7 montre un premier mode de mise en oeuvre du système de synchronisation de la Figure 1 dans le réseau de communication de la Figure 5, avec système de synchronisation chez l'opérateur de services ;
- la Figure 8 montre un deuxième mode de mise en oeuvre du système de synchronisation de la Figure 1 dans le réseau de communication de la Figure 5, avec unité de spécification chez l'opérateur de services et unités de reconnaissance et d'activation chez le broadcaster ;
- la Figure 9 montre un troisième mode de mise en oeuvre du système de synchronisation de la Figure 1 dans le réseau de communication de la Figure 5, avec unité de spécification chez le broadcaster et unités de reconnaissance et d'activation dans le terminal ;
- et la Figure 10 représente sous forme schématique une implémentation des unités de reconnaissance et d'activation dans le terminal, pour le mode de mise en oeuvre de la Figure 9.

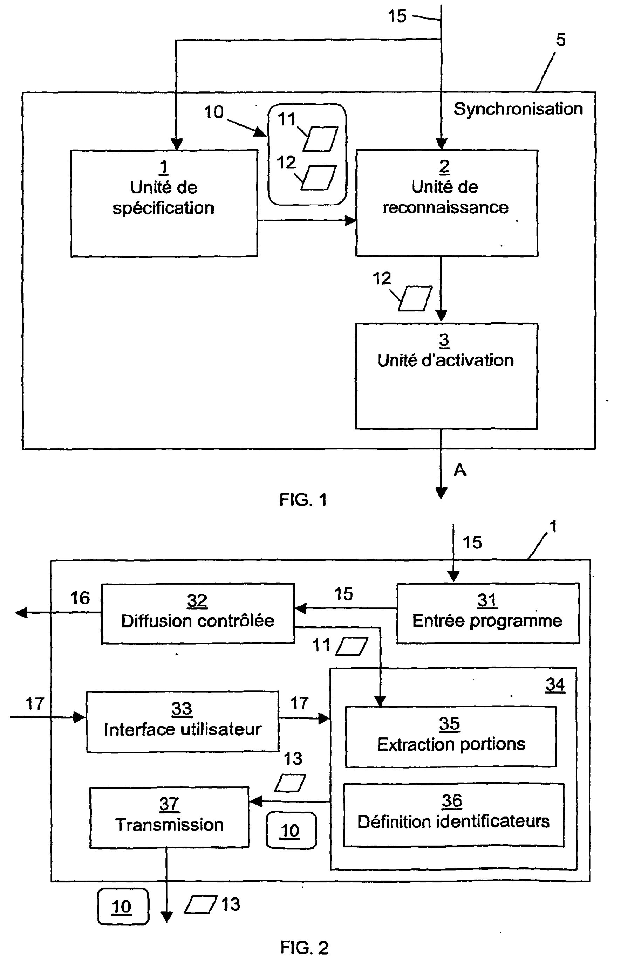

Un système de synchronisation 5 (Figure 1) est prévu pour synchroniser des programmes audiovisuels 15 et des services interactifs S. Il comprend une unité de spécification 1 de signaux de synchronisation, apte à préparer des couples 10 constitués chacun d'un ensemble d'éléments de reconnaissance 11 et d'un identificateur d'action 12, à partir des programmes audiovisuels 15 et d'opérations de sélection effectuées par un utilisateur, avant diffusion des programmes 15 sur un réseau. Dans chacun de ces couples 10, les éléments de reconnaissance 11 incluent au moins une portion extraite du contenu du programme 15, destinée à servir comme signal (au moins partiel) de synchronisation, ou des instructions d'extraction de cette portion dans un programme diffusé antérieurement au programme 15 faisant l'objet de la synchronisation. Les identificateurs d'action 12 de chacun des couples 10 contiennent des informations relatives à l'exécution d'actions en cas de détection de tels signaux de synchronisation dans des flux porteurs des programmes 15.

Une unité de reconnaissance 2 est prévue pour enregistrer les couples 10 en provenance de l'unité de spécification 1, les utiliser lors de réceptions de flux porteurs des programmes 15 pour reconnaître les portions de contenu dans les programmes et, dans les conditions définies par les ensembles d'éléments de reconnaissance 11, identifier des occurrences de synchronisation. Elle est également destinée à transmettre les identificateurs d'actions 12 pour déclenchement de ces actions, en cas de détections de signaux d'identification correspondant à ces actions.

Une unité d'activation 3 est prévue pour recevoir les identifcateurs d'actions 12 en provenance de l'unité de reconnaissance 2 et pour déclencher les actions A appropriées.

Les trois unités 1, 2 et 3 du système de synchronisation vont être maintenant détaillées, en référence respectivement aux figures 2, 3 et 4. L'unité de spécification 1 (Figure 2) comprend un module d'entrée 31 des programmes audiovisuels 15 ou de programmes audiovisuels associés pour la synchronisation et un module de diffusion contrôlée 32 à un opérateur de contenus 16 de ces programmes. Ces derniers, ou au moins des parties significatives de ces programmes (image, son, couleur d'un bandeau...), sont pour ce faire disponibles en avance de phase pour l'opérateur chargé de programmer le système de synchronisation 5. Typiquement, celui-ci dispose d'un enregistrement sur cassette ou DVD, ou d'une séquence destinée à être insérée dans une émission. L'opérateur peut par exemple visionner image par image un des programmes 15, ou entendre certains passages sonores.

Une interface utilisateur 33 de l'unité de spécification 1 permet à l'opérateur d'entrer des commandes 17 en relation avec cette diffusion contrôlée. Elle autorise l'opérateur à sélectionner des images, des sons, des parties d'images ou des combinaisons de ces portions de contenu, pour inclure dans les éléments de reconnaissance 11 :
- soit les portions elles-mêmes,
- soit des instructions d'extraction de ces portions dans un (ou plusieurs) programme audiovisuel diffusé avant le programme 15,
- soit des identificateurs de ces portions.

L'interface 33 lui permet aussi de définir des critères de reconnaissance plus complexes, reposant sur des conjonctions ou des alternatives (respectivement : plusieurs portions, ou au moins une portion parmi plusieurs, à reconnaître), des critères temporels (date, créneau de temps) ou des chaînes. L'interface 33 permet également à l'opérateur de définir des identificateurs d'actions 12 associés aux éléments de reconnaissance 11, tels que le déclenchement ou la diffusion d'un service interactif identifié, et des délais de temporisation, entre la détection de signaux de synchronisation et le déclenchement d'actions correspondantes. De tels délais sont :
- soit transmis séparément sous forme de délais 13 prévus pour une temporisation entre une détection par l'unité de reconnaissance 2 et une transmission des identificateurs d'actions 12 à l'unité d'activation 3,
- soit incorporés dans les identificateurs d'actions 12 pour temporisation entre la réception de ces derniers par l'unité d'activation 3 et le déclenchement des actions A correspondantes.

L'utilisation conjointe des deux types de délais est également possible.

Un module de préparation 34 établit les couples 10 et les délais 13 en fonction des commandes de l'opérateur et les communique à un module de transmission 37 vers l'unité de reconnaissance 2. Ce module de préparation 34 comprend notamment un sous-module d'extraction 35 des portions sélectionnées dans les programmes visionnés et un sous-module 36 de définition des identificateurs d'actions 12.

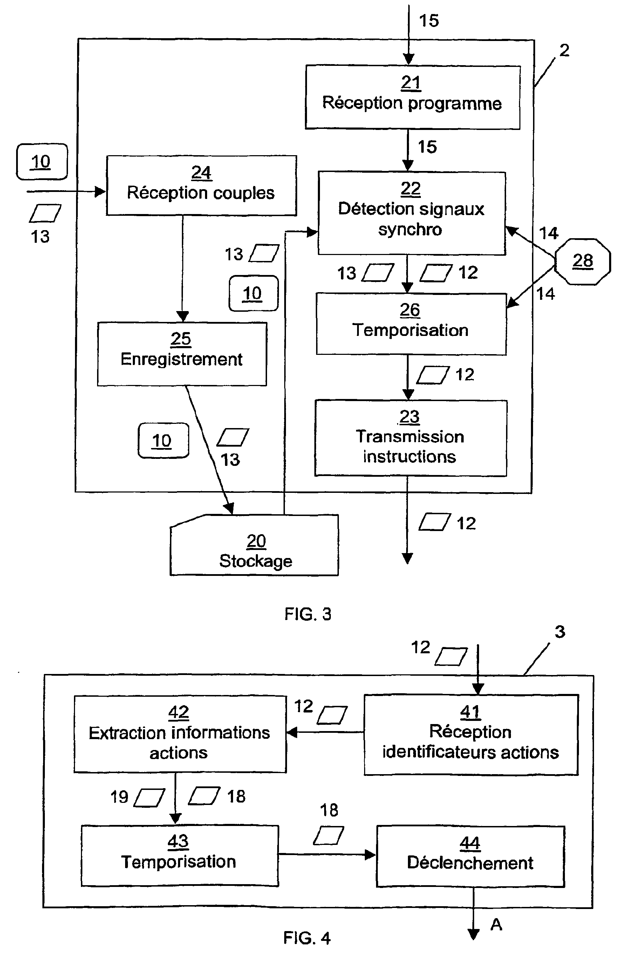

L'unité de reconnaissance 2 (Figure 3) comprend pour sa part un module de réception 21 des programmes audiovisuels (notamment les programmes 15) et un module de réception 24 des informations en provenance de l'unité de spécification 1, incluant les couples 10 et les délais de temporisation 13. Un module d'enregistrement 25 permet d'enregistrer automatiquement ces informations dans un espace de stockage 20.

L'unité de reconnaissance 2 comprend aussi un module de détection 22 des signaux de synchronisation, destiné notamment à comparer les contenus des programmes 15 aux portions de contenus obtenues au moyen des éléments de reconnaissance 11 et mémorisés dans l'espace de stockage 20. Le module de détection 22 est en relation avec des sources d'informations susceptibles de servir à l'identification des critères de sélection, par exemple une horloge 28 fournissant des informations horaires en cas de critères temporels (date, plage de temps). Le module de détection 22 est prévu pour communiquer tels quels les identificateurs d'actions 12 et les délais de temporisation 13 associés en cas de détection des signaux de synchronisation, vers un module de transmission 23 d'instructions via un module de temporisation 26. Ce dernier a pour fonction de temporiser éventuellement la transmission en présence de délais de temporisation 13, tandis que le module de transmission 23 est destiné à transmettre tels quels les identificateurs d'actions 12 à l'unité d'activation 3.

Comme indiqué plus haut, l'interface 33 et le module de préparation 34 de l'unité de spécification 1 autorisent l'opérateur à élaborer des informations incluses dans les éléments de reconnaissance 11, qui permettent à l'unité de reconnaissance 2 d'identifier et d'obtenir les portions de contenus via le module de réception 21 des programmes audiovisuels.

Ces informations peuvent notamment consister en un canal et un horaire, cet horaire pouvant être remplacé par un indicateur de sélection instantanée. Les informations peuvent être envoyées sous forme de triggers, prévus pour déclencher au niveau de l'unité de reconnaissance 2 l'extraction et l'enregistrement des portions visées. Dans une variante d'acquisition des portions de contenu, c'est la présence d'un motif (son et/ou image) dans un programme diffusé sur un canai donné et dans une plage horaire déterminée, qui déclenche après un délai prédéfini les opérations d'extraction et d'enregistrement.

Par exemple, on souhaite provoquer un enregistrement automatique de tous les épisodes d'une série. Or, cette série est toujours précédée du même générique, qui dure environ une minute. Le premier épisode de la série doit passer environ 3 minutes après une page de fin de publicité, dont une portion d'image représentative est déjà stockée comme référence. Dans un premier temps, on provoque alors l'enregistrement du premier épisode, en définissant précisément la chaîne et la plage horaire, et en prévoyant le déclenchement de l'enregistrement 2 minutes (par sécurité) après la détection de la portion d'image publicitaire.

Parallèlement, on déclenche une extraction et un enregistrement d'une image diffusée sur la chaîne, 3 minutes 30 après cette même détection. Cette image, qui fait partie du générique de la série (une vérification est possible), est ensuite elle-même utilisée comme portion extraite de référence pour la détection des épisodes suivants. On déclenche ainsi un enregistrement systématique de la durée d'un épisode dès que cette image est détectée sur le canal de diffusion. Selon des variantes ou des versions améliorées:
- on utilise un générique de fin des épisodes pour déclencher la fin de l'enregistrement ;
- on utilise plusieurs images du générique d'ouverture espacées dans le temps pour valider le déclenchement de l'enregistrement, afin de réduire le risque d'enregistrement provoqué par une bande annonce ;
- on croise la reconnaissance d'image avec un guide des programmes, afin de limiter les périodes de mise en attente et réduire les risques d'enregistrement intempestif.

Le module d'enregistrement 25 de l'unité de reconnaissance 2 est ainsi capable de procéder à l'enregistrement des portions extraites en fonction des informations transmises par l'unité de spécification 1, sans que ces portions aient dû transiter entre l'unité de spécification 1 et l'unité de reconnaissance 2.

L'unité d'activation 3 (Figure 4) comprend un module de réception 41 des identificateurs d'actions 12, un module d'extraction d'informations d'actions dans ces identificateurs 12, et de transmission d'instructions d'actions 18 et de délais de temporisation 19 éventuels vers un module de déclenchement 44 d'actions, via un module de temporisation 43. Ce dernier a pour fonction de temporiser la transmission des instructions d'actions 18 telles quelles, selon les délais de temporisation 19. Le module de déclenchement 44 déclenche quant à lui les actions A visées par les instructions d'actions 18, dès réception de ces dernières.

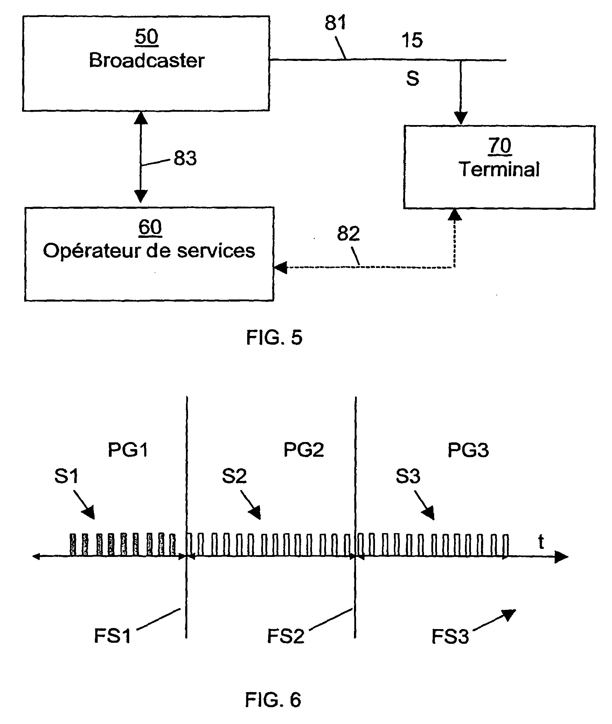

Le système de synchronisation 5 va maintenant être exposé dans plusieurs applications pratiques de télévision interactive, impliquant un réseau de communication (Figure 5) qui comprend un broadcaster 50, un opérateur de services 60 et un terminal 70 grand-public interactif. Le broadcaster 50 est relié à des terminaux du type du terminal 70, par un réseau mono-directionnel 81 (un réseau de diffusion TV hertzien, par câble ou par satellite). L'opérateur de services 60 peut être ou non relié au terminal 70, par un réseau bidirectionnel 82 (voie de retour modem, câble...) de type point à point, comme le réseau téléphonique. Le broadcaster 50 et l'opérateur de services 60 sont par exemple connectés l'un à l'autre par une liaison 83 du type TCP-IP, sur laquelle est déployé un bus conforme au standard CORBA (pour Common Object Request Broker Architecture).

Il est prévu que le broadcaster 50 diffuse en boucle (carrousel) des contenus interactifs ou leurs URLs, appelés pour simplifier des services interactifs S, pendant la durée des programmes audiovisuels 15 associés. Dans un exemple de fonctionnement (Figure 6), le broadcaster 50 diffuse successivement au cours du temps t les services S1, S2 et S3 en boucle, conjointement aux programmes enrichis respectifs PG1, PG2 et PG3, jusqu'à des instants de fin de disponibilité FS1, FS2 et FS3 des services S.

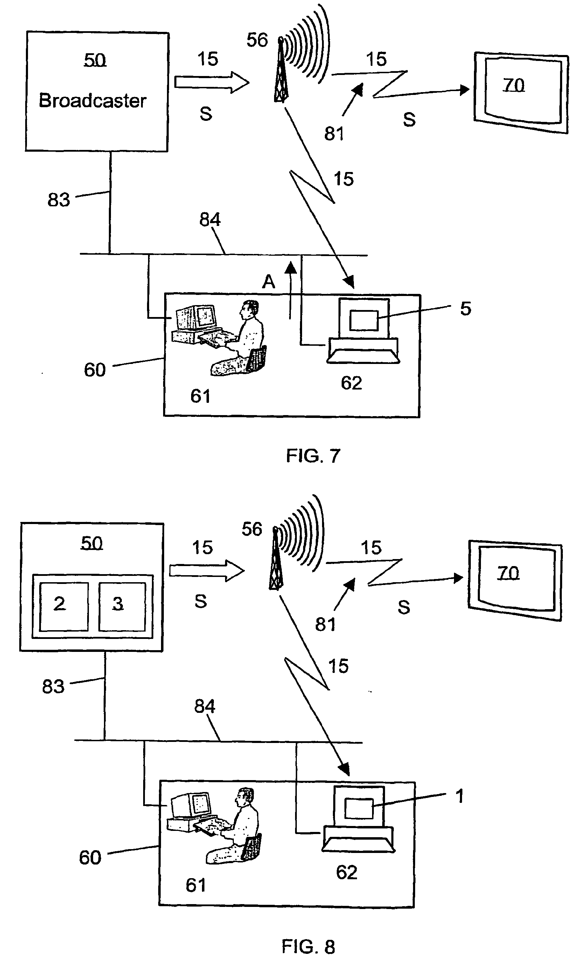

Dans un premier mode de réalisation (Figure 7), le système de synchronisation 5 est implémenté dans un ordinateur 62 de l'opérateur de services 60, et est contrôlé par un opérateur 61 via un réseau 84. En fonctionnement avec extraction de portions de contenus, on peut procéder de la manière suivante :
- étape 1 : programmation de l'unité de spécification 1 du système de synchronisation 5, par calage sur une chaîne où un programme audiovisuel doit être diffusé préalablement au programme 15 et comprenant un motif identique de référence, ou sur des informations relatives aux programmes de cette chaîne (telles qu'un guide des programmes) ; définition d'images et/ou sons à détecter associés à ce motif, et spécification des éléments de reconnaissance 11 incluant des instructions d'extraction de ces images et/ou sons et de l'identificateur d'action 12 à envoyer ;
- étape 2 : diffusion par le broadcaster 50 du programme audiovisuel préalable, réception de ce programme par le système de synchronisation 5, application des instructions d'extraction dans ce programme des images et/ou sons à détecter, et enregistrement ;
- étape 3 : lorsque le moment de diffuser le programme 15 est venu, un serveur vidéo ou un magnétoscope du broadcaster 50 démarre la diffusion du programme audiovisuel 15 ;
- étape 4 : diffusion du programme audiovisuel 15 seul (via des relais de diffusion 56) ;
- étape 5 : le système de synchronisation 5 reçoit alors les images du programme audiovisuel 15 sur lesquelles il faut synchroniser un service interactif S et les analyse ;
- étape 6 : lorsque les images et/ou les sons programmés sont détectés, le système de synchronisation 5 notifie un serveur de diffusion du broadcaster 50, qui peut alors déclencher la diffusion du service interactif S simultanément au programme audiovisuel 15 ;
- étape 7 : diffusion du service interactif S et du programme audiovisuel 15 en simultané.

L'intérêt pour l'opérateur de services 60 de ne pas enregistrer directement les images et/ou sons à détecter est qu'il peut lui suffire, pour programmer la synchronisation, de disposer d'informations partielles sur les diffusions prévues avant celle des programmes 15.

Dans un deuxième mode de réalisation (Figure 8), l'unité de spécification 1 est implémentée au sein de l'opérateur de services 60 comme dans le premier mode de réalisation de la Figure 7, mais les unités de reconnaissance 2 et d'activation 3 sont implémentées dans le serveur de diffusion du broadcaster 50. Le déroulement des étapes de fonctionnement est pour le reste similaire à celui du premier mode de réalisation.

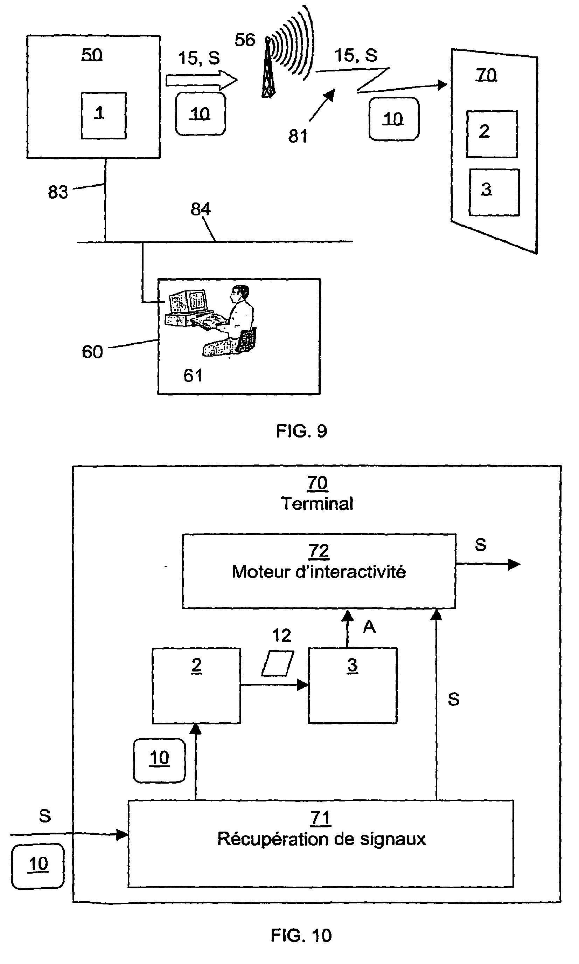

Dans un troisième mode de réalisation (Figure 9), l'unité de spécification 1 est cette fois implémentée chez le broadcaster 50, et les unités de reconnaissance 2 et d'activation 3 sont embarqués dans le terminal 70. Plus précisément (Figure 10), le terminal 70 comprend un bloc de récupération 71 de signaux diffusés (impliquant le système d'exploitation et des pilotes ou drivers), prévu pour recevoir des couples 10 d'ensembles d'éléments de reconnaissance 11 et d'identificateurs d'actions 12 et des services interactifs S. Ce bloc 71 est prévu pour communiquer les éléments de reconnaissance 11 à l'unité de reconnaissance 2, et les services interactifs S à un moteur 72 d'interactivité ou de présentation.

En fonctionnement, on procède de la manière suivante:
- étape 1 : programmation par un opérateur du broadcaster 50 de l'unité de reconnaissance 2 du système de synchronisation 5, par choix des images et/ou sons pour la synchronisation et diffusion en avance de phase des éléments de reconnaissance 11 (plus généralement: du couple 10) comprenant des instructions d'extraction de ces images et/ou sons dans un programme préalablement diffusé et du service interactif S à exécuter lors d'une détection ;
- étape 2 : extraction et enregistrement par l'unité de reconnaissance 2 dans un programme diffusé par le broadcaster 50, des images et/ou sons à détecter, selon les instructions d'extraction incluses dans les éléments de reconnaissance 11 ;
- étape 3 : lorsque le moment de diffuser le programme 15 est venu, un serveur vidéo ou un magnétoscope du broadcaster 50 démarre la diffusion du programme audiovisuel 15 ;
- étape 4 : diffusion du programme audiovisuel 15 seul ;
- étape 5 : l'unité de reconnaissance 2 embarquée dans le terminal 70 reçoit alors les images du programme audiovisuel 15 sur lesquelles il faut synchroniser le service interactif S et les analyse ;
- étape 6 : lorsque les images et/ou les sons programmés sont détectés, l'unité de reconnaissance 2 notifie le moteur d'interactivité 72 via l'unité d'activation 3, et le moteur 72 peut alors déclencher l'exécution du service interactif S ; dans des variantes, l'action à déclencher est l'affichage ou la mise à jour du service interactif sur le terminal 70 ;
- étape 7 : apparition du service interactif S et du programme audiovisuel 15 en simultané.

Un avantage de ce troisième mode de réalisation par rapport aux deux premiers est qu'on évite un décalage entre le moment où le programme audiovisuel 15 est diffusé et le moment où le service interactif S est inséré dans celui-ci. Il nécessite cependant des ressources conséquentes dans le terminal 70 (CPU, mémoire...).

Selon un quatrième mode de réalisation, non représenté, le système de synchronisation 5 est entièrement intégré à un terminal. L'utilisateur peut ainsi définir les modalités de synchronisation, par exemple en vue d'enregistrement de programmes.

Dans une variante de réalisation, l'unité de spécification 1 est prévue pour permettre tout d'abord à l'unité de reconnaissance 2 d'acquérir plusieurs portions extraites associées respectivement à des identificateurs univoques de portions. Ainsi, lors de la phase de mémorisation dans l'espace de stockage 20 de chaque portion de contenu, le module d'enregistrement 25 mémorise aussi l'identificateur de portion correspondant. Lors d'une étape ultérieure de spécification d'une détection visée, l'unité de spécification 1 se contente d'envoyer les identificateurs de portions dans les éléments de reconnaissance 11 des couples 10. Ces identificateurs jouent alors le rôle de clés permettant de lier l'apparition des portions extraites et les autres paramètres, tels que notamment délais 13 ou 19 de temporisation et/ou actions à déclencher.

Par exemple, l'étape préalable d'acquisition de portions extraites définit trois identificateurs ID1, ID2 et ID3 associés respectivement à trois portions de contenu POR1, POR2 et POR3 (tableau 1), puis l'étape de transmission ultérieure donnant des instructions de synchronisation d'actions définit des délais et des actions A' et A" respectivement associées aux identificateurs ID2 et ID1 (tableau 2).

**Tableau 1 - Enregistrement de portions et d'identificateurs associés**

| Identificateur de portion | Portion extraite |
|---|---|
| ID1 | POR1 |
| ID2 | POR2 |
| ID3 | POR3 |

**Tableau 2 - Instructions de synchronisation d'actions**

| Identificateur de portion | Délai | Action |
|---|---|---|
| ID2 | 8 | A' |
| ID1 | 10 | A" |

Dans une réalisation particulière de cette variante, les spécifications de détection visées peuvent contenir aussi des plages horaires de détection. Si l'unité de reconnaissance 2 détecte que le temps courant est extérieur à ces plages horaires, elle ne procède pas à l'analyse des contenus diffusés. Dans le cas contraire, le module de détection est activé. Plusieurs plages horaires de reconnaissance peuvent par ailleurs se chevaucher. Par exemple, les identificateurs lD1 et ID2 sont respectivement associés à une détection « Tous les vendredis entre 15h et 16h » et « Tous les jours sauf le week-end entre 12h et 16h ».

Des applications aux mondes analogique et numérique du système de synchronisation 5 vont maintenant être développées, respectivement selon la norme ATVEF (pour « Advanced Television Enhancement Forum ») et DVB. Elles portent sur l'intégration des unités de reconnaissance 2 et d'activation 3 dans le terminal 70 (figure 9)

### A/ Applications au monde analogique : ATVEF

On distingue trois étapes principales :
- indication au préalable d'au moins une image à détecter ; le terminal 70 doit donc acquérir et sauvegarder cette image ;
- déclenchement d'une action ou de plusieurs actions sur détection de cette image pendant une période de détection ;
- et indication au terminal 70 de la fin de la période de détection.

### A1 ― Indication d'une ou plusieurs images à détecter

Selon un premier exemple, on détecte une image complète. Pendant l'émission d'un programme, on envoie ainsi un trigger indiquant au terminal 70 que l'image courante reçue doit être sauvegardée pour être ensuite détectée.

Le trigger a par exemple la forme suivante : 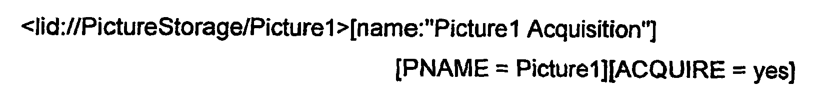 où:
- le champ « PictureStorage » indique au terminal 70 que l'image courante doit être stockée sous le nom « Picture1 » ;
- le champ « name », optionnel, donne une description du trigger ;
- le champ « PNAME » spécifie le nom de l'image qui sera référencée par la suite ;
- et le champ «ACQUIRE» signale que le trigger doit déclencher l'acquisition d'une image.

Selon un second exemple, on détecte une sous-partie d'une image. Le trigger ATVEF a alors par exemple la forme suivante : 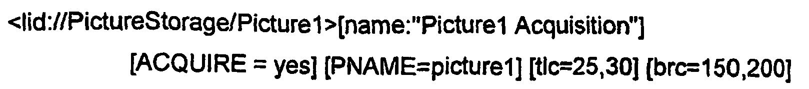
où:
- le champ « tlc » (pour « top left corner ») donne les coordonnées du coin en haut à gauche d'un rectangle à détecter ;
- et le champ « brc » (pour « bottom right corner »), optionnel, donne les coordonnées du coin en bas à droite du rectangle à détecter ; si ce champ est absent, on considère le coin en bas à droite de l'image pour la définition du rectangle.

### A2 - Indication du début de la période de détection

Selon une réalisation avantageuse, on envoie un trigger spécifique indiquant au terminal 70 qu'il doit lancer la recherche d'une image précédemment acquise et un autre trigger spécifique de fin de recherche. La spécification de l'image visée est faite par exemple en référençant un identificateur d'image.

Le trigger peut alors avoir la forme suivante : 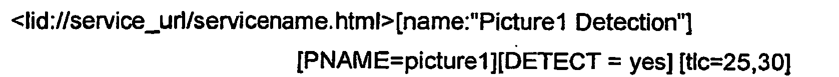
où:
- le champ « service_url/servicename » spécifie une action à déclencher lors de la détection d'une image précédemment acquise ;
- le champ « PNAME » indique l'image à détecter (picture1) ;
- le champ « DETECT » signale que le trigger est prévu pour déclencher une détection ;
- et le champ «tic» précise la zone de l'image à considérer (coin en haut à gauche).

### A3 - Indication de la fin de la période de détection

Un trigger est envoyé au terminal 70 afin de lui indiquer que la période de détection d'une image se termine.

Dans l'exemple considéré, l'arrêt de la détection de l'image Picture1 prend ainsi effet lors de la réception du trigger suivant : 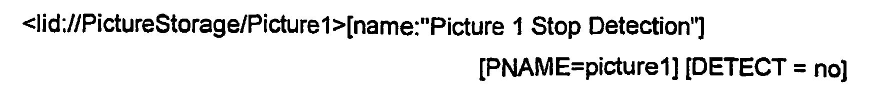 où:
- le champ « PictureStorage » indique au terminal 70 où est stockée l'image et sous quel nom ;
- le champ « name », optionnel, donne une description du trigger ;
- et le champ « DETECT » spécifie que le trigger est prévu pour déclencher l'arrêt de la détection d'image.

### B/ Applications au monde numérique: DVB

Des tables Sl (pour « System Information ») offrent la possibilité d'inclure des descripteurs d'événements tels que des « Short Events Descriptors » (voir la norme de l'ETSI - pour « European Telecommunications Standard Institute » - EN 300-468 V1.4.1, § 6.2.33). Un tel descripteur indique le nom de l'événement considéré et en donne une description sous format texte (256 caractères maximum pour le type d'événement utilisé ici).

Il se présente de manière générale sous la forme syntaxique suivante : 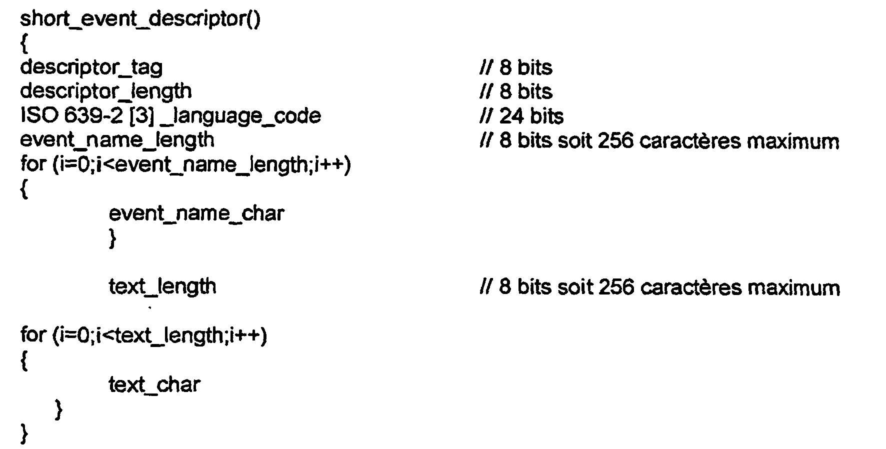 où :
- le champ « descriptor_tag » fournit une étiquette d'identification ; dans la mise en oeuvre considérée, on l'utilise pour spécifier qu'il s'agit d'un stockage d'image (« PICTURE_STORAGE »), d'un début de période de détection (« PICTURE_START_DETECTION ») ou d'un arrêt de période de détection (« PICTURE_STOP_DETECTiON ») ;
- le champ « descriptor length » donne la longueur du descripteur ;
- le champ «language_code» comprend trois caractères indiquant le code de la langue (par exemple « fre ») ;
- le champ «event_name_length » donne la longueur en octets du nom de l'événement ;
- le champ « event_name_char» est une chaîne de caractères identifiant l'événement; il peut ici s'agir d'acquisition d'image (« Picture1_Acquisition »), de début de détection (« Picture1_Start_ Detection ») ou de fin de détection (« Picture1_Stop_Detection ») ;
- le champ «text_length » donne la longueur en octets de la description de l'événement ;
- et le champ «text_char» est une chaîne de caractères décrivant l'événement; dans l'exemple considéré, il consiste en « PNAME=Picture1 ».

Plus précisément, en accord avec la table 12 de la norme ETSI EN 300-468 V1.4.1, indiquant que les étiquettes (« tags ») utilisateurs employées pour le champ descriptor_tag vont de 0x80 à 0xFE on définit les correspondances indiquées dans le tableau 3

**Tableau 3 - Valeurs du champ descriptor_tag**

| **Descripteur** | **Valeur** |
|---|---|
| 0×80 | PICTURE_STORAGE |
| 0x81 | PICTURE_START_DETECTION |
| 0x82 | PICTURE_STOP_DETECTION |

Des exemples de signalisation indiquant au terminal 70 respectivement qu'il doit stocker une image sous le nom « Picture1 », commencer la période de détection de cette image, et stopper la période de détection de cette image, sont donnés dans les tableaux 4, 5 et 6.

**Tableau 4 - Signalisation pour stockage d'image**

| **Descripteur** | **Valeur** |
|---|---|
| descriptor_tag | 0x80 |
| descriptor length | // Somme à calculer ! |
| ISO 639-2 [3] language code | Fre |
| event name_length | 20 |
| event name_char | Picture1 Acquisition |
| text length | 14 |
| text_char | PNAME=Picture1 |

**Tableau 5 - Signalisation pour début de période de détection**

| **Descripteur** | **Valeur** |
|---|---|
| descriptor tag | 0x81 |
| descriptor length | *ll* Somme à calculer |
| ISO 639-2 [3] janguage code | Fre |
| event name length | 24 |
| event_name_char | Picture1_Start_Detection |
| text length | 14 |
| text_char | PNAME=Picture1 |

**Tableau 6 - Signalisation pour fin de période de détection**

| **Descripteur** | **Valeur** |
|---|---|
| descriptor tag | 0x82 |
| descriptor length | // Somme à calculer ! |
| ISO 639-2 [3] _language code | Fre |
| event name length | 23 |
| event name char | Picture1_ Stop_Detection |
| text length | 14 |
| text_char | PNAME=Picture1 |

## Revendications

1. Unité de reconnaissance (2) de signaux de synchronisation dans au moins un programme audiovisuel (15) reçu, ledit programme audiovisuel (15) comprenant un contenu audiovisuel destiné à être diffusé à des utilisateurs et des informations de contrôle, ladite unité de reconnaissance (2) comprenant :
- un module de réception (21, 24) et un module d'enregistrement (25) dans un espace de stockage (20), d'éléments de reconnaissance (11) permettant d'obtenir au moins une portion extraite du contenu dudit programme audiovisuel (15).
- un module de réception (21) via un réseau de diffusion générale (81), d'au moins un flux transmis porteur dudit programme audiovisuel (15),
- un module de détection (22) desdits signaux de synchronisation (11) dans ledit programme audiovisuel (15) reçu, au moyen desdits éléments de reconnaissance (11) stockés dans ledit espace de stockage (20), par reconnaissance dans le contenu dudit programme audiovisuel (15) reçu, de ladite portion extraite,
- et un module de transmission (23) d'instructions d'actions (12) en cas de détection desdits signaux de synchronisation dans ledit programme audiovisuel (15), lesdites instructions (12) étant prévues pour déclencher au moins une action,
**caractérisée en ce que** le module de réception (21. 24) des éléments de reconnaissance (11) est prévu pour recevoir parmi lesdits éléments de reconnaissance (11), des instructions d'extraction de ladite portion extraite dans au moins un flux d'un programme audiovisuel préalablement reçu par le module de réception (21) de flux, ladite portion étant extraite dudit programme audiovisuel préalablement reçu et **en ce que** ledit module d'enregistrement (25) est prévu pour extraire directement ladite portion dudit flux selon lesdites instructions d'extraction et pour enregistrer ladite portion dans l'espace de stockage (20).

2. Unité de reconnaissance (2) selon la revendication 1, **caractérisée en ce que** le module de réception (21, 24) des éléments de reconnaissance (11) est prévu pour recevoir un message de déclenchement et **en ce que** le module d'enregistrement (25) est prévu pour extraire et enregistrer dès réception dudit message de déclenchement, ladite portion dudit flux préalablement reçu.

3. Unité de reconnaissance (2) selon l'une des revendications 1 ou 2, **caractérisée en ce que** le module de réception (24) des éléments de reconnaissance (11) est aussi prévu pour recevoir parmi lesdits éléments de reconnaissance (11), au moins un identificateur de ladite portion extraite, et **en ce que** ledit module de détection (22) est capable de récupérer dans l'espace de stockage (20) ladite portion extraite préalablement enregistrée et associée audit identificateur, pour reconnaître dans le contenu dudit programme audiovisuel (15) reçu ladite portion extraite.

4. Unité de reconnaissance (2) selon l'une quelconque des revendications précédentes, **caractérisée en ce que** le module de réception (24) des éléments de reconnaissance (11) est aussi prévu pour recevoir directement ladite portion extraite parmi lesdits éléments de reconnaissance (11) et le module d'enregistrement (25) est prévu pour enregistrer ladite portion extraite dans l'espace de stockage (20).

5. Unité de reconnaissance (2) selon l'une quelconque des revendications précédentes, **caractérisée en ce que** l'unité de reconnaissance (2) comprend aussi un module de temporisation (26) avant envoi desdites instructions d'actions (12) par le module de transmission (23).

6. Unité de reconnaissance (2) selon l'une quelconque des revendications précédentes, **caractérisée en ce que** les modules de réception (24) et d'enregistrement (25) d'éléments de reconnaissance (11) et le module de transmission (23) d'instructions d'actions (12) sont prévus pour respectivement recevoir, enregistrer et transmettre des identificateurs (12) relatifs aux dites actions à déclencher.

7. Unité de reconnaissance (2) selon l'une quelconque des revendications précédentes, **caractérisée en ce que** chacune desdites portions de contenu est constituée d'au moins une des portions suivantes : une image, une partie d'image, un son et une combinaison quelconque d'au moins deux desdites portions.

8. Unité de reconnaissance (2) selon l'une quelconque des revendications précédentes, **caractérisée en ce que** lesdits éléments de reconnaissance (11) incluent au moins un opérateur booléen, ledit module de détection (22) étant prévu pour détecter au moins deux desdites portions de contenu en relation avec ledit opérateur booléen et le module de transmission (23) étant prévu pour transmettre lesdites instructions d'action (12) en cas d'une telle détection.

9. Unité de reconnaissance (2) selon l'une quelconque des revendications précédentes, **caractérisée en ce que** lesdits éléments de reconnaissance (11) incluent au moins une information de temps, ledit module de détection (22) étant prévu pour détecter lesdites portions de contenu en relation avec ladite information de temps et le module de transmission (23) étant prévu pour transmettre lesdites instructions d'action (12) en cas d'une telle détection.

10. Unité de reconnaissance (2) selon la revendication 9, **caractérisée en ce que** ladite information de temps comprend au moins une information choisie parmi une date de détection et une plage temporelle de détection.

11. Unité de reconnaissance (2) selon l'une quelconque des revendications précédentes, **caractérisée en ce que** lesdits éléments de reconnaissance (11) incluent au moins une référence de canal, ledit module de détection (22) étant prévu pour détecter lesdites portions de contenu en relation avec ladite référence de canal et le module de transmission (23) étant prévu pour transmettre lesdites instructions d'action (12) en cas d'une telle détection.

12. Unité de spécification (1) de signaux de synchronisation associés à au moins un programme audiovisuel (15), ledit programme audiovisuel (15) comprenant un contenu audiovisuel destiné à être diffusé à des utilisateurs et des informations de contrôle, et lesdits signaux de synchronisation étant destinés à être détectés, dans au moins un flux porteur dudit programme audiovisuel (15) transmis via un réseau de diffusion générale (81) et à déclencher ainsi au moins une action,
**caractérisée en ce que** ladite unité de spécification (1) comprend :
- un module de préparation (34) d'éléments de reconnaissance (11) permettant d'obtenir au moins une portion extraite du contenu dudit programme audiovisuel (15),
- et un module de transmission (37) desdits éléments de reconnaissance (11) indépendamment de transmissions dudit programme audiovisuel (15), à au moins une unité de reconnaissance (2) destinée à détecter lesdits signaux de synchronisation dans ledit flux transmis porteur dudit programme audiovisuel (15), en reconnaissant ladite portion extraite dans le contenu dudit programme audiovisuel (15),
et **en ce que** les modules de préparation (34) et de transmission (37) de ladite unité (1) sont prévus respectivement pour préparer et transmettre des instructions d'extraction, dans au moins un flux d'un programme audiovisuel préalablement reçu par l'unité de reconnaissance (2) via le réseau de diffusion générale (81), de ladite portion de contenu, ladite portion étant extraite dudit programme audiovisuel préalablement reçu
ladite unité de spécification (1) étant capable de coopérer avec ladite unité de reconnaissance (2) conforme à l'une quelconque des revendications 1 à 11.

13. Unité de spécification (1) selon la revendication 12, **caractérisée en ce que** les modules de préparation (34) et de transmission (37) de ladite unité (1) sont prévus respectivement pour préparer et transmettre des identificateurs (12) relatifs aux dites actions à déclencher en cas de détection desdits signaux de synchronisation.

14. Unité de spécification (1) selon la revendication 13, **caractérisée en ce que** lesdits identificateurs d'actions (12) sont relatifs à au moins une des actions suivantes : diffusion d'un service interactif (S), déclenchement d'un service interactif (S), déclenchement d'une mise à jour d'un service interactif (S), déclenchement d'un enregistrement dudit programme audiovisuel (15) et connexion à un site Web.

15. Système de synchronisation (5) comprenant :
- une unité de spécification (1) de signaux de synchronisation associés à au moins un programme audiovisuel (15), ledit programme audiovisuel (15) comprenant un contenu audiovisuel destiné à être diffusé à des utilisateurs et des informations de contrôle,
- une unité de reconnaissance (2) desdits signaux de synchronisation dans au moins un flux porteur dudit programme audiovisuel (15) transmis via un réseau de diffusion générale (81), par reconnaissance d'au moins une portion extraite du contenu dudit programme audiovisuel (15), dans le programme audiovisuel reçu,
- et une unité d'activation (3) prévue pour déclencher au moins une action en cas de détection desdits signaux de synchronisation par l'unité de reconnaissance (2),
**caractérisé en ce que** l'unité de spécification (1) est prévue pour préparer et transmettre à l'unité de reconnaissance (2) des éléments de reconnaissance (11) permettant d'obtenir ladite portion extraite et comprenant des instructions d'extraction de ladite portion de contenu dans au moins un flux d'un programme audiovisuel préalablement reçu par l'unité de reconnaissance (2) via le réseau de diffusion générale (81), ladite portion étant extraite dudit programme audiovisuel préalablement reçu et **en ce que** l'unité de reconnaissance (2) est prévue pour extraire directement ladite portion dudit flux selon lesdites instructions d'extraction et pour enregistrer ladite portion,
l'unité de reconnaissance (2) étant conforme à l'une quelconque des revendications 1 à 11 et l'unité de spécification (1) étant conforme à l'une quelconque des revendications 12 à 14.

16. Centre de diffusion générale (50), **caractérisé en ce qu'**il comprend un dispositif choisi parmi au moins un module de spécification (1) conforme à l'une quelconque des revendications 12 à 14, un module de reconnaissance (2) conforme à l'une quelconque des revendications 1 à 11, et un système de synchronisation conforme à la revendication 15.

17. Opérateur de services (60), **caractérisé en ce qu'**il comprend un dispositif choisi parmi au moins un module de spécification (1) conforme à l'une quelconque des revendications 12 à 14; un module de reconnaissance (2) conforme à l'une quelconque des revendications 1 à 11, et un système de synchronisation conforme à la revendication 15.

18. Terminal (70) de réception de programmes audiovisuels (15), **caractérisé en ce qu'**il comprend un dispositif choisi parmi au moins un module de spécification (1) conforme à l'une quelconque des revendications 12 à 14, un module de reconnaissance (2) conforme à l'une quelconque des revendications 1 à 11, et un système de synchronisation conforme à la revendication 15.

19. Procédé d'activation par reconnaissance de signaux de synchronisation dans au moins un programmé audiovisuel (15) reçu, ledit programme audiovisuel (15) comprenant un contenu audiovisuel destiné à être diffusé à des utilisateurs et des inforinations de contrôle, ledit procédé comprenant les étapes suivantes :
- réception via un réseau de diffusion générale (81), d'au moins un flux transmis porteur dudit programme audiovisuel (15),
- détection desdits signaux de synchronisation (11) dans ledit programme audiovisuel (15) reçu au moyen d'éléments de reconnaissance (11) permettant d'obtenir au moins une portion extraite du contenu dudit programme audiovisuel (15) et stockés dans un espace de stockage (20), par reconnaissance de ladite portion extraite, dans le contenu dudit programme audiovisuel (15),
- et déclenchement d'au moins une action en cas de détection desdits signaux de synchronisation dans ledit programme audiovisuel (15),
**caractérisée en ce que** lesdits éléments de reconnaissance (11) incluant des instructions d'extraction de ladite portion extraite dans au moins un flux d'un programme audiovisuel préalablement reçu, par extraction de ladite portion dudit programme audiovisuel préalablement reçu, on extrait directement ladite portion dudit flux préalablement reçu selon lesdites instructions d'extraction et on enregistre ladite portion dans l'espace de stockage (20).

20. Procédé de spécification de signaux de synchronisation associés à au moins un programme audiovisuel (15), ledit programme audiovisuel (15) comprenant un contenu audiovisuel destiné à être diffusé à des utilisateurs et des informations de contrôle, et lesdits signaux de synchronisation étant destinés à être détectés dans au moins un flux porteur dudit programme audiovisuel (15) transmis via un réseau de diffusion générale (B1) et à déclencher ainsi au moins une action,
**caractérisée en ce que** ledit procédé de spécification comprend les étapes suivantes :
- préparation d'éléments de reconnaissance (11) permettant d'obtenir au moins une portion extraite du contenu dudit programme audiovisuel (15),
- transmission desdites informations indépendamment de transmissions dudit programme audiovisuel (15), pour détection desdits signaux de synchronisation dans ledit flux transmis porteur dudit programme audiovisuel (15), par reconnaissance de ladite portion extraite dans le contenu dudit programme audiovisuel (15),
- et transmission d'instructions d'extraction, dans au moins un flux d'un programme audiovisuel préalablement reçu par l'unité de reconnaissance (2) via le réseau de diffusion générale (81), de ladite portion de contenu, par extraction de ladite portion dudit programme audiovisuel préalablement reçu.

21. Procédé de synchronisation comprenant les étapes suivantes:
- une étape de spécification de signaux de synchronisation associés à au moins un programme audiovisuel (15), ledit programme audiovisuel (15) comprenant un contenu audiovisuel destiné à être diffusé à des utilisateurs et des informations de contrôle, dans laquelle on spécifie pour ladite détection, des éléments de reconnaissance (11) permettant d'obtenir au moins une portion extraite du contenu dudit programme audiovisuel (15),
- une étape de détection desdits signaux de synchronisation dans au moins un flux porteur dudit programme audiovisuel (15) transmis via un réseau de diffusion générale (81), dans laquelle on détecte lesdits signaux de synchronisation dans ledit programme audiovisuel reçu, par reconnaissance de ladite portion extraite dans le contenu dudit programme audiovisuel (15),
- et une étape de déclenchement d'au moins une action en cas de détection desdits signaux de synchronisation,
**caractérisé en ce qu'**on prépare et on transmet à l'unité de reconnaissance (2) lesdits éléments de reconnaissance (11) comprenant des instructions d'extraction de ladite portion de contenu dans au moins un flux d'un programme audiovisuel préalablement reçu par l'unité de reconnaissance (2) via le réseau de diffusion générale (81), par extraction de ladite portion dudit programme audiovisuel préalablement reçu, et **en ce qu'**on extrait directement ladite portion dudit flux selon lesdites instructions d'extraction et on enregistre ladite portion.

22. Produit programme d'ordinateur, **caractérisé en ce qu'**il comprend des instructions de code de programme pour l'exécution des étapes de l'un des procédés selon l'une des revendications 19 à 21 lorsque ledit programme est exécuté sur un ordinateur.

## Patentansprüche

1. Einheit (2) zur Erkennung von Synchronisationssignalen in mindestens einem empfangenen audiovisuellen Programm (15), wobei das audiovisuelle Programm (15) einen audiovisuellen Inhalt, der dazu bestimmt ist, für Benutzer gebroadcastet zu werden, sowie Kontrollinformationen enthält, wobei die Er.kennungseinheit (2) Folgendes umfasst:
- ein Empfangsmodul (21, 24) und ein Modul (25) für die Aufnahme in einen Speicherraum (20) von Erkennungselementen (11), welche die Gewinnung mindestens eines aus dem Inhalt des audiovisuellen Programms (15) ausgelesenen Teils ermöglichen,
- ein Modul (21), um mindestens einen übertragenen, das audiovisuelle Programm (15) tragenden Datenstrom über ein Broadcastnetz (81) zu empfangen,
- ein Modul (22), um die Synchronisationssignale (11) in dem empfangenen audiovisuellen Programm (15) mittels der in dem Speicherraum (20) gespeicherten Erkennungselemente (11) durch Erkennung des ausgelesenen Teils in dem Inhalt des empfangenen audiovisuellen Programms (15) zu detektieren, und
- ein Modul (23) für die Übertragung von Aktionsanweisungen (12) bei Detektion der Synchronisationssignale in dem audiovisuellen Programm (15), wobei die Anweisungen (12) vorgesehen sind, um mindestens eine Aktion auszulösen,
**dadurch gekennzeichnet, dass** das Modul (21, 24) für den Empfang der Erkennungselemente (11) vorgesehen ist, um unter den Erkennungselementen (11) Anweisungen zu empfangen, um den ausgelesenen Teil in mindestens einem Datenstrom eines zuvor von dem Datenstromempfangsmodul (21) empfangenen audiovisuellen Programms auszulesen, wobei der Teil aus dem zuvor empfangenen audiovisuellen Programm ausgelesen wird, und dass das Aufnahmemodul (25) vorgesehen ist, um den Teil direkt aus dem Datenstrom gemäß den Ausleseanweisungen auszulesen und um den Teil in den Speicherraum (20) aufzunehmen.

2. Erkennungseinheit (2) nach Anspruch 1, **dadurch gekennzeichnet, dass** das Modul (21, 24) für den Empfang der Erkennungselemente (11) vorgesehen ist, um eine Auslösenachricht zu empfangen, und dass das Aufnahmemodul (25) vorgesehen ist, um gleich bei Empfang der Auslösenachricht den Teil aus dem zuvor empfangenen Datenstrom auszulesen und aufzunehmen.

3. Erkennungseinheit (2) nach einem der Ansprüche 1 oder 2, **dadurch gekennzeichnet, dass** das Modul (24) für den Empfang der Erkennungselemente (11) auch vorgesehen ist, um unter den Erkennungselementen (11) mindestens eine Kennung des ausgelesenen Teils zu empfangen, und dass das Detektionsmodul (22) in der Lage ist, in dem Speicherraum (20) den ausgelesenen, zuvor aufgenommenen und der Kennung zugeordneten Teil zurückzubekommen, um in dem Inhalt des empfangenen audiovisuellen Programms (15) den ausgelesenen Teil zu erkennen.

4. Erkennungseinheit (2) nach einem der vorhergehenden Ansprüche, **dadurch gekennzeichnet, dass** das Modul (24) für den Empfang der Erkennungselemente (11) auch vorgesehen ist, um unter den Erkennungselementen (11) den ausgelesenen Teil direkt zu empfangen, und das Aufnahmemodul (25) vorgesehen ist, um den ausgelesenen Teil in den Speicherraum (20) aufzunehmen.

5. Erkennungseinheit (2) nach einem.der vorhergehenden Ansprüche, **dadurch gekennzeichnet, dass** die Erkennungseinheit (2) ebenfalls ein Modul (26) zur Verzögerung vor der Sendung der Aktionsanweisungen (12) durch das Übertragungsmodul (23) umfasst.

6. Erkennungseinheit (2) nach einem der vorhergehenden Ansprüche, **dadurch gekennzeichnet, dass** die Module für den Empfang (24) und für die Aufnahme (25) von Erkennungselementen (11) und das Modul (23) für die Übertragung von Aktionsanweisungen (12) vorgesehen sind, um Kennungen (12) betreffend die auszulösenden Aktionen zu empfangen, aufzunehmen beziehungsweise zu übertragen.

7. Erkennungseinheit (2) nach.einem der vorhergehenden Ansprüche, **dadurch gekennzeichnet, dass** jeder der Inhaltsteile durch mindestens einen der folgenden Teile gebildet ist: ein Bild, einen Bildteil, einen Ton und eine beliebige Kombination von mindestens zwei der Teile.

8. Erkennungseinheit (2) nach einem der vorhergehenden Ansprüche, **dadurch gekennzeichnet, dass** die Erkennüngselemente (11) mindestens einen booleschen Operator einschließen, wobei das Detektionsmodul (22) vorgesehen ist, um mindestens zwei der Inhaltsteile in Verbindung mit dem booleschen Operator zu detektieren, und das Übertragungsmodul (23) vorgesehen ist, um die Aktionsanweisungen (12) bei einer solchen Detektion zu übertragen.

9. Erkennungseinheit (2) nach einem der vorhergehenden Ansprüche, **dadurch gekennzeichnet, dass** die Erkennungselemente (11) mindestens eine Zeitinformation einschließen, wobei das Detektionsmodul (22) vorgesehen ist, um die Inhaltsteile in Verbindung mit der Zeitinformation zu detektieren, und das Übertragungsmodul (23) vorgesehen ist; um die Aktionsanweisungen (12) bei einer solchen Detektion zu übertragen.

10. Erkennungseinheit (2) nach Anspruch 9, **dadurch gekennzeichnet, dass** die Zeitinformation mindestens eine Information umfasst, die unter einem Detektionsdatum und einem Detektionszeitfenster gewählt wird.

11. Erkennungseinheit (2) nach einem der vorhergehenden Ansprüche, **dadurch gekennzeichnet, dass** die Erkennungselemente (11) mindestens eine Kanalreferenz einschließen, wobei das Detektionsmodul (22) vorgesehen ist, um die Inhaltsteile in Verbindung mit der Kanalreferenz zu detektieren, und das Übertragungsmodul (23) vorgesehen ist, um die Aktionsanweisungen (12) bei einer solchen Detektion zu übertragen.

12. Einheit (1) zur Spezifikation von mindestens einem audiovisuellen Programm (15) zugeordneten Synchronisationssignalen, wobei das audiovisuelle Programm (15) einen audiovisuellen Inhalt, der dazu bestimmt ist, für Benutzer gebroadcastet zu werden, sowie Kontrollinformationen enthält, und wobei die Synchronisationssignale dazu bestimmt sind, in mindestens einem das über ein Broadcastnetz (81) übertragene audiovisuelle Programm (15) tragenden Datenstrom detektiert zu werden und somit mindestens eine Aktion auszulösen,
**dadurch gekennzeichnet, dass** die Spezifikationseinheit (1) Folgendes umfasst:
- ein Modul (34) für die Vorbereitung von Erkennungselementen (11), welche die Gewinnung mindestens eines aus dem Inhalt des audiovisuellen Programms (15) ausgelesenen Teils ermöglichen, und
- ein Modul (37) für die Übertragung der Erkennungselemente (11) - unabhängig von Übertragungen des audiovisuellen Programms (15) - an mindestens eine Erkennungseinheit (2) zur Detektion der Synchronisationssignale in dem übertragenen, das audiovisuelle Programm (15) tragenden Datenstrom durch Erkennung des ausgelesenen Teils in dem Inhalt des audiovisuellen Programms (15), und dass das Vorbereitungsmodul (34) und das Übertragungsmodul (37) der Einheit (1) vorgesehen sind für die Vorbereitung beziehungsweise für die Übertragung von Anweisungen zum Auslesen des Inhaltsteils in mindestens einem Datenstrom eines zuvor von der Erkennungseinheit (2) über das Broadcastnetz (81) empfangenen audiovisuellen Programms, wobei der Teil aus dem zuvor empfangenen audiovisuellen Programm ausgelesen wird,
wobei die Spezifikationseinheit (1) in der Lage ist, mit der Erkennungseinheit (2) nach einem der Ansprüche 1 bis 11 zusammenzuwirken.

13. Spezifikationseinheit (1) nach Anspruch 12, **dadurch gekennzeichnet, dass** das Vorbereitungsmodul (34) und das Übertragungsmodul (37) der Einheit (1) für die Vorbereitung beziehungsweise für die Übertragung von Kennungen (12) betreffend die bei Detektion der Synchronisationssignale auszulösenden Aktionen vorgesehen sind.

14. Spezifikationseinheit (1) nach Anspruch 13, **dadurch gekennzeichnet, dass** die Aktionskennungen (12) mindestens eine der folgenden Aktionen betreffen: Broadcasten eines interaktiven Dienstes (S), Auslösen eines interaktiven Dienstes (S), Auslösen einer Aktualisierung eines interaktiven Dienstes (S), Auslösen einer Aufnahme des audiovisuellen Programms (15) und.verbindung zu einer Web-Site.

15. Synchronisationssystem (5) mit
- einer Einheit (1) zur Spezifikation.von mindestens einem audiovisuellen Programm (15) zugeordneten Synchronisationssignalen, wobei das audiovisuelle Programm (15) einen audiovisuellen Inhalt, der dazu bestimmt ist, für Benutzer gebroadcastet zu werden, sowie Kontrollinformationen enthält,
- einer Einheit (2) zur Erkennung der Synchronisationssignale in mindestens einem das über ein Broadcastnetz (81) übertragene audiovisuelle Programm tragenden Datenstrom durch Erkennung mindestens eines aus dem Inhalt des audiovisuellen Programms (15) ausgelesenen Teils in dem empfangenen audiovisuellen Programm und
- einer Aktivierungseinheit (3) zum Auslösen von mindestens einer Aktion bei Detektion der Synchronisationssignale durch die Erkennungseinheit (2),
**dadurch gekennzeichnet, dass** die Spezifikationseinheit (1) vorgesehen ist, um Erkennungselemente (11) vorzubereiten und an die Erkennungseinheit (2) zu übertragen, welche die Gewinnung des ausgelesenen Teils ermöglichen und Anweisungen umfassen, um den Inhaltsteil in mindestens einem Datenstrom eines zuvor von der Erkennungseinheit (2) über das Broadcastnetz (81) empfangenen audiovisuellen Programms auszulesen, wobei der Teil aus dem zuvor empfangenen audiovisuellen Programm ausgelesen wird, und dass die Erkennungseinheit (2) vorgesehen ist, um den Teil direkt aus dem Datenstrom gemäß den Ausleseanweisungen auszulesen und den Teil aufzunehmen,
wobei die Erkennungseinheit (2) einem der Ansprüche 1 bis 11 und die Spezifikationseinheit (1) einem der Ansprüche 12 bis 14 entsprechen.

16. Broadcaster (50), **dadurch gekennzeichnet, dass** es eine Vorrichtung umfasst, die unter mindestens einem Spezifikationsmodul (1) nach einem der Ansprüche 12 bis 14, einem Erkennungsmodul (2) nach einem der Ansprüche 1 bis 11 und einem Synchronisationssystem nach Anspruch 15 gewählt ist.

17. Services Operator (60), **dadurch gekennzeichnet, dass** er eine Vorrichtung umfasst, die unter mindestens einem Spezifikationsmodul (1) nach einem der Ansprüche 12 bis 14, einem Erkennungsmodul (2) nach einem der Ansprüche 1 bis 11 und einem Synchronisationssystem nach Anspruch 15 gewählt wird.

18. Endgerät (70) für den Empfang von audiovisuellen Programmen (15), **dadurch gekennzeichnet, dass** es eine Vorrichtung umfasst, die unter mindestens einem Spezifikationsmodul (1) nach einem der Ansprüche 12 bis 14, einem Erkennungsmodul (2) nach einem der Ansprüche 1 bis 11 und einem Synchronisationssystem nach Anspruch 15 gewählt wird.

19. Verfahren zur Aktivierung durch Erkennung von Synchronisationssignalen in mindestens einem empfangenen audiovisuellen Programm (15), wobei das audiovisuelle Programm (15) einen audiovisuellen Inhalt, der dazu bestimmt ist, für Benutzer gebroadcastet zu werden, sowie Kontrollinformationen enthält, wobei das Verfahren die folgenden Schritte umfasst:
- Empfang von mindestens einem übertragenen, das audiovisuelle Programm (15) tragenden Datenstrom über ein Broadcastnetz (81),
- Detektion der Synchronisationssignale (11) in dem empfangenen audiovisuellen Programm (15) mittels Erkennungselementen (11), welche die Gewinnung mindestens eines aus dem Inhalt des audiovisuellen Programms (15) ausgelesenen Teils ermöglichen und die in einem Speicherraum (20) gespeichert sind, durch Erkennen des ausgelesenen Teils in dem Inhalt des audiovisuellen Programms (15), und
- Auslösen von mindestens einer Aktion bei Detektion der Synchronisationssignale in dem audiovisuellen Programm (15),
**dadurch gekennzeichnet, dass** die Erkennungselemente (11) Anweisungen umfassen, um den ausgelesenen Teil in mindestens einem Datenstrom eines zuvor empfangenen audiovisuellen Programms durch Auslesen des Teils aus dem zuvor empfangenen audiovisuellen Programm auszulesen, der Teil aus dem zuvor empfangenen Datenstrom gemäß den Ausleseanweisungen direkt ausgelesen wird und der Teil in den Speicherraum (20) aufgezeichnet wird.

20. Verfahren zur Spezifikation von mindestens einem audiovisuellen Programm (15) zugeordneten Synchronisationssignalen, wobei das audiovisuelle Programm (15) einen audiovisuellen Inhalt, der dazu bestimmt ist, für Benutzer gebroadcastet zu werden, sowie Kontrollinformationen enthält, wobei die Synchronisationssignale dazu bestimmt sind, in mindestens einem das über ein Broadcastnetz (81) übertragene audiovisuelle Programm (15) tragenden Datenstrom detektiert zu werden und somit mindestens eine Aktion auszulösen,
**dadurch gekennzeichnet, dass** das Spezifikationsverfahren die folgenden Schritte umfasst:
- Vorbereitung von Erkennungselementen (11), welche die Gewinnung mindestens eines aus dem audiovisuellen Programm (15) ausgelesenen Teils ermöglichen,
- Übertragung der Informationen - unabhängig von Übertragungen des audiovisuellen Programms (15) - zur Detektion der Synchronisationssignale in dem übertragenen, das audiovisuelle Programm (15) tragenden Datenstrom durch Erkennung des ausgelesenen Teils in dem Inhalt des audiovisuellen Programms (15), und
- Übertragung von Anweisungen zum Auslesen des Inhaltsteils in mindestens einem Datenstrom eines zuvor von der Erkennungseinheit (2) über das Broadcastnetz (81) empfangenen audiovisuellen Programms durch Auslesen des Teils aus dem zuvor empfangenen audiovisuellen Programm.

21. Synchronisationsverfahren mit den folgenden Schritten:
- einem Schritt der Spezifikation von mindestens einem audiovisuellen Programm (15) zugeordneten Synchronisationssignalen, wobei das audiovisuelle Programm (15) einen audiovisuellen Inhalt, der dazu bestimmt ist, für Benutzer gebroadcastet zu werden, sowie Kontrollinformationen enthält, bei dem für die Detektion Erkennungselemente (11) spezifiziert werden, welche die Gewinnung mindestens eines aus dem Inhalt des audiovisuellen Programms (15) ausgelesenen Teils ermöglichen,
- einem Schritt der Detektion der Synchronisationssignale in mindestens einem das über ein Broadcastnetz (81) übertragene audiovisuelle Programm (15) tragenden Datenstrom, bei dem die Synchronisationssignale in dem empfangenen audiovisuellen Programm durch Erkennung des ausgelesenen Teils in dem Inhalt des audiovisuellen Programms (15) detektiert werden und
- einem Schritt des Auslösens von mindestens einer Aktion bei Detektion der Synchronisationssignale,
**dadurch gekennzeichnet, dass** die Erkennungselemente (11) vorbereitet und an die Erkennungseinheit (2) übertragen werden, welche Anweisungen umfassen, um den Inhaltsteil in mindestens einem Datenstrom eines zuvor von der Erkennungseinheit (2) über das Broadcastnetz (81) empfangenen audiovisuellen Programms durch Auslesen des Teils aus dem zuvor empfangenen audiovisuellen Programm auszulesen, und dass der Teil direkt aus dem Datenstrom gemäß den Ausleseanweisungen ausgelesen wird und der Teil aufgenommen wird.

22. Computerprogrammprodukt, **dadurch gekennzeichnet, dass** es Programmcode-Anweisungen für die Durchführung der Schritte eines der Verfahren nach einem der Ansprüche 19 bis 21 umfasst, wenn das Programm auf einem Computer ausgeführt wird

## Claims

1. Recognition unit (2) for recognizing synchronization signals in at least one audiovisual programme (15) received, said audiovisual programme (15) .comprising an audiovisual content intended to be transmitted to users and control information, said recognition unit (2) comprising:
- a reception module (21, 24) and a recording module (25) for recording in a storage space (20), recognition elements (11) making it possible to obtain at least one extracted portion of the content of said audiovisual programme (15),
- a reception module (21) for receiving via a broadcasting network (81), at least one transmitted stream carrying said audiovisual programme (15),
- a detection module (22) for detecting said synchronization signals (11) in said audiovisual programme (15) received, by means of said recognition elements (11) stored in said storage space (20), by recognition in the content of said audiovisual programme (15) received, of said extracted portion,
- and a transmission module (23) for transmitting action instructions (12) in case of detection of said synchronization signals in said audiovisual programme (15), said instructions (12) being designed to trigger at least one action,
**characterized in that** the module (21, 24) for receiving the recognition elements (11) is designed to receive among said recognition elements (11), instructions for extracting said extracted portion from at least one stream of an audiovisual programme previously received by the stream reception module (21), said portion being extracted from said audiovisual programme previously received, and **in that** said recording module (25) is designed to directly extract said portion of said stream according to said extraction instructions and to record said portion in the storage space (20).

2. Recognition unit (2) according to Claim 1, **characterized in that** the module (21, 24) for receiving the recognition elements (11) is designed to receive a triggering message and **in that** the recording module (25) is designed to extract and record upon receipt of said triggering message, said portion of said previously received stream.

3. Recognition unit (2) according to one of Claims 1 or 2, **characterized in that** the module (24) for receiving the recognition elements (11) is also designed to receive among said recognition elements (11), at least one identifier of said extracted portion, and **in that** said detection module (22) is capable of retrieving from the storage space (20) said previously recorded extracted portion associated with said identifier, so as to recognize in the content of said audiovisual programme (15) received said extracted portion.

4. Recognition unit (2) according to any one of the preceding claims, **characterized in that** the module (24) for receiving the recognition elements (11) is also designed to receive directly said extracted portion among said recognition elements (11) and the recording module (25) is designed to record said extracted portion in the storage space (20).

5. Recognition unit (2) according to any one of the preceding claims, **characterized in that** the recognition unit (2) also comprises a timeout module (26) before despatch of said action instructions (12) by the transmission module (23).

6. Recognition unit (2) according to any one of the preceding claims, **characterized in that** the modules for receiving (24) and for recording (25) recognition elements (11) and the module for transmitting (23) action instructions (12) are designed to respectively receive, record and transmit identifiers (12) relating to said actions to be triggered.

7. Recognition unit (2) according to any one of the preceding claims, **characterized in that** each of said portions of content consists of at least one of the following portions: a picture, a piece of picture, a sound and any combination of at least two of said portions.

8. Recognition unit (2) according to any one of the preceding claims, **characterized in that** said recognition elements (11) include at least one Boolean operator, said detection module (22) being designed to detect at least two of said portions of content in conjunction with said Boolean operator and the transmission module (23) being designed to transmit said action instructions (12) in case of such detection.

9. Recognition unit (2) according to any one of the preceding claims, **characterized in that** said recognition elements (11) include at least one time information item, said detection module (22) being designed to detect said portions of content in conjunction with said time information item and the transmission module (23) being designed to transmit said action instructions (12) in case of such detection.

10. Recognition unit (2) according to Claim 9, **characterized in that** said time information item comprises at least one information item chosen from among a date of detection and a detection time slot.

11. Recognition unit (2) according to any one of the preceding claims, **characterized in that** said recognition elements (11) include at least one channel reference, said detection module (22) being designed to detect said portions of content in conjunction with said channel reference and the transmission module (23) being designed to transmit said action instructions (12) in case of such detection.

12. Specification unit (1) for specifying synchronization signals associated with at least one audiovisual programme (15), said audiovisual programme (15) comprising an audiovisual content intended to be transmitted to users and control information, and said synchronization signals being intended to be detected in at least one stream carrying said audiovisual programme (15) transmitted via a broadcasting network (81) and to thus trigger at least one action,
**characterized in that** said specification unit (1) comprises:
- a preparation module (34) for preparing recognition elements (11) making it possible to obtain at least one extracted portion of the content of said audiovisual programme (15),
- and a transmission module (37) for transmitting said recognition elements (11) independently of transmissions of said audiovisual programme (15), to at least one recognition unit (2) intended to detect said synchronization signals in said transmitted stream carrying said audiovisual programme (15), by recognizing said extracted portion in the content of said audiovisual programme (15),
and **in that** the preparation (34) and transmission (37) modules of said unit (1) are designed respectively to prepare and transmit extraction instructions, in at least one stream of an audiovisual programme previously received by the recognition unit (2) via the broadcasting network (81), for extracting said portion of content, said portion being extracted from said audiovisual programme previously received,
said specification unit (1) preferably being capable of cooperating with said recognition unit (2) in accordance with any one of Claims 1 to 11.

13. Specification unit (1) according to Claim 12, **characterized in that** the preparation (34) and transmission (37) modules of said unit (1) are designed respectively to prepare and transmit identifiers (12) relating to said actions to be triggered in the case of detection of said synchronization signals.

14. Specification unit (1) according to Claim 13, **characterized in that** said action identifiers (12) relate to at least one of the following actions: transmission of an interactive service (S), triggering of an interactive service (S), triggering of an update of an interactive service (S), triggering of a recording of said audiovisual programme (15) and connection to a website.

15. Synchronization system (5) comprising:
- a specification unit (1) for specifying synchronization signals associated with at least one audiovisual programme (15), said audiovisual programme (15) comprising an audiovisual content intended to be transmitted to users and control information,
- a recognition unit (2) for recognizing said synchronization signals in at least one stream carrying said audiovisual programme (15) transmitted via a broadcasting network (81), by recognizing at least one extracted portion of the content of said audiovisual programme (15), in the audiovisual programme received,
- and an activation unit (3) designed to trigger at least one action in the case of detection of said synchronization signals by the recognition unit (2),
**characterized in that** the specification unit (1) is designed to prepare and transmit to the recognition unit (2) recognition elements (11) making it possible to obtain said extracted portion and comprising instructions for extracting said portion of the content from at least one stream of an audiovisual programme previously received by the recognition unit (2) via the broadcasting network (81), said portion being extracted from said audiovisual programme previously received, and **in that** the recognition unit (2) is designed to directly extract said portion of said stream according to said extraction instructions and to record said portion,
the recognition unit (2) preferably being in accordance with any one of Claims 1 to 11 and the specification unit (1) preferably being in accordance with any one of Claims 12 to 14.

16. Broadcasting centre (50), **characterized in that** it comprises a device chosen from among at least a specification module (1) in accordance with any one of Claims 12 to 14, a recognition module (2) in accordance with any one of Claims 1 to 11, and a synchronization system in accordance with Claim 15.

17. Services operator (60), **characterized in that** it comprises a device chosen from among at least a specification module (1) in accordance with any one of Claims 12 to 14, a recognition module (2) in accordance with any one of Claims 1 to 11, and a synchronization system in accordance with Claim 15.

18. Terminal (70) for receiving audiovisual programmes (15), **characterized in that** it comprises a device chosen from among at least a specification module (1) in accordance with any one of Claims 12 to 14, a recognition module (2) in accordance with any one of Claims 1 to. 11, and a synchronization system in accordance with Claim 15.

19. Process for activation by recognition of synchronization signals in at least one audiovisual programme (15) received, said audiovisual programme (15) comprising an audiovisual content intended to be transmitted to users and control information, said process comprising the following steps:
- reception via a broadcasting network (81), of at least one transmitted stream carrying said audiovisual programme (15),
- detection of said synchronization signals (11) in said audiovisual programme (15) received by means of recognition elements (11) making it possible to obtain at least one extracted portion of the content of said audiovisual programme (15) and stored in a storage space (20), by recognizing said extracted portion, in the content of said audiovisual programme (15),
- and triggering of at least one action in case of detection of said synchronization signals in said audiovisual programme (15),
**characterized in that** said recognition elements (11) including instructions for extracting said extracted portion from at least one stream of a previously received audiovisual programme, by extracting said portion from said audiovisual programme previously received, said portion of said previously received stream is extracted directly according to said extraction instructions and said portion is recorded in the storage space (20),
said recognition process preferably being implemented in particular by means of a recognition unit (1) in accordance with any one of Claims 1 to 11.

20. Specification process for specifying synchronization signals associated with at least one audiovisual programme (15), said audiovisual programme (15) comprising an audiovisual content intended to be transmitted to users and control information, and said synchronization signals being intended to be detected in at least one stream carrying said audiovisual programme (15) transmitted via a broadcasting network (81) and to thus trigger at least one action,
**characterized in that** said specification process comprises the following steps:
- preparation of recognition elements (11) making it possible to obtain at least one extracted portion of the content of said audiovisual programme (15),
- transmission of said information independently of transmissions of said audiovisual programme (15), for detection of said synchronization signals in said transmitted stream carrying said audiovisual programme (15), by recognizing said extracted portion in the content of said audiovisual programme (15),
- and transmission of extraction instructions, in at least one stream of an audiovisual programme previously received by the recognition unit (2) via the broadcasting network (81), for extracting said portion of content, by extracting said portion from said audiovisual programme previously received,
said specification process preferably being implemented by means of a specification unit (1) in accordance with any one of Claims 12 to 14.

21. Synchronization process comprising the following steps:
- a step of specifying synchronization signals associated with at least one audiovisual programme (15), said audiovisual programme (15) comprising an audiovisual content intended to be transmitted to users and control information, in which step recognition elements (11) making it possible to obtain at least one extracted portion of the content of said audiovisual programme (15) are specified for said detection,
- a step of detecting said synchronization signals in at least one stream carrying said audiovisual programme (15) transmitted via a broadcasting network (81), in which step said synchronization signals are detected in said audiovisual programme received, by recognizing said extracted portion in the content of said audiovisual programme (15),
- and a step of triggering at least one action in case of detection of said synchronization signals,
**characterized in that** said recognition elements (11) comprising instructions for extracting said portion of content from at least one stream of an audiovisual programme previously received by the recognition unit (2) via the broadcasting network (81), by extracting said portion from said audiovisual programme previously received, are prepared and transmitted to the recognition unit (2), and **in that** said portion of said stream is extracted directly according to said extraction instructions and said portion is recorded,
said synchronization process preferably being implemented by the synchronization system (5) of Claim 15.

22. Computer program product, **characterized in that** it comprises program code instructions for the execution of the steps of one of the processes according to one of Claims 19 to 21 when said program is executed on a computer.
